(19) 

Europäisches
Patentamt
European
Patent Office
Office européen
des brevets

(11) **EP 4 561 228 A1**

(12) **EUROPEAN PATENT APPLICATION**
published in accordance with Art. 153(4) EPC

(43) Date of publication:
**28.05.2025 Bulletin 2025/22**

(21) Application number: **23849477.7**

(22) Date of filing: **02.08.2023**

(51) International Patent Classification (IPC):
**H04W 72/04** (2023.01)

(52) Cooperative Patent Classification (CPC):
**H04W 72/04; H04W 72/0446; H04W 72/25;
H04W 72/566**

(86) International application number:
**PCT/CN2023/110824**

(87) International publication number:
**WO 2024/027773 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.08.2022 CN 202210933587**

(71) Applicant: **Huawei Technologies Co., Ltd.
Shenzhen, Guangdong 518129 (CN)**

(72) Inventors:
• **WU, Hao**
**Shenzhen, Guangdong 518129 (CN)**
• **PENG, Wenjie**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD, APPARATUS, AND SYSTEM**

(57) Embodiments of this application provide a communication method, apparatus, and system. The method may include: receiving first information from a second terminal device, where first sidelink control information includes a first priority value, and the first priority value indicates a priority of data corresponding to the first information; and sending first sharing indication information to the second terminal device, where the first sharing indication information indicates a first shared resource for the second terminal device, a second priority value is greater than or equal to the first priority value, the second priority value indicates a priority corresponding to a first channel occupancy time resource, and the first channel occupancy time resource includes the first shared resource. In this way, a priority value corresponding to a shared resource indicated in sharing indication information is greater than or equal to a priority value corresponding to another terminal device. This helps ensure that the another terminal device normally uses a shared resource in an obtained COT shared resource, to improve transmission efficiency over an unlicensed spectrum.

FIG. 3

EP 4 561 228 A1

## Description

This application claims priority to Chinese Patent Application No. 202210933587.6, filed with the China National Intellectual Property Administration on August 4, 2022 and entitled "COMMUNICATION METHOD, APPARATUS, AND SYSTEM", which is incorporated herein by reference in its entirety.

## TECHNICAL FIELD

Embodiments of this application relate to the communication field, and more specifically, to a communication method, apparatus, and system.

## BACKGROUND

Currently, in a channel occupancy time (channel occupancy time, COT) sharing mechanism for sidelink (sidelink, SL), if a time domain location of a reserved resource of another terminal device meets a time interval sharing condition, a terminal device A may share a COT resource preempted by the terminal device A with another terminal device.

Therefore, how to ensure normal use of the COT resource to improve transmission efficiency of a terminal device over an unlicensed spectrum in sidelink communication is an urgent problem to be resolved.

## SUMMARY

Embodiments of this application provide a communication method, apparatus, and system, to ensure normal use of a COT resource, so as to improve transmission efficiency of a terminal device over an unlicensed spectrum in sidelink communication.

According to a first aspect, a communication method is provided. The method is applied to a first terminal device, and the method includes: receiving first information from a second terminal device, where the first information includes a first priority value, and the first priority value indicates a priority of data corresponding to the first information; and sending first sharing indication information to the second terminal device, where the first sharing indication information indicates a first shared resource for the second terminal device, a second priority value is greater than or equal to the first priority value, the second priority value indicates a priority corresponding to a first channel occupancy time resource, and the first channel occupancy time resource includes the first shared resource.

According to the foregoing technical solution, a priority value corresponding to data sent by another terminal device is obtained, and sharing indication information is determined, where a priority value of a resource indicated in the indication information is greater than or equal to the priority value corresponding to the another terminal device, to help ensure that the another terminal device normally uses a shared resource in an obtained channel occupancy time resource, so as to improve transmission efficiency over an unlicensed spectrum.

In some implementations, before the sending first sharing indication information to the second terminal device, the method further includes: determining the first channel occupancy time resource based on the first priority value.

In some implementations, the method further includes: receiving second information from a third terminal device, where the second information includes a third priority value, and the third priority value indicates a priority of data corresponding to the second information; and the determining the first channel occupancy time resource based on the first priority value further includes: determining the first channel occupancy time resource based on the first priority value and the third priority value.

In some implementations, the determining the first channel occupancy time resource based on the first priority value and the third priority value includes: preempting the first channel occupancy time resource based on a largest priority value in a first set, where the first set includes the first priority value, the third priority value, and a priority value corresponding to data sent by the first terminal device, or the first set includes the first priority value and the third priority value, and the second priority value is the largest priority value.

According to the foregoing technical solution, the first terminal device learns of priority values of other terminal devices, and selects a largest priority value from the priority values to preempt a channel occupancy time resource. Because the priority value used when the channel occupancy time resource is preempted is the largest, after receiving a shared resource indicated by sharing indication information, another terminal device can normally use the shared resource in the channel occupancy time resource, to improve the transmission efficiency in the unlicensed spectrum.

In some implementations, the determining the first channel occupancy time resource based on the first priority value includes: determining, based on the first priority value, that the second terminal device is a sharing object corresponding to the first channel occupancy time resource, where the second priority value is a priority value corresponding to data sent by the first terminal device.

According to the foregoing technical solution, the first terminal device preempts a channel occupancy time resource based on the priority value corresponding to the data sent by the first terminal device. Because the first terminal device obtains a priority value corresponding to another terminal device (for example, the second terminal device), the first terminal device may determine a resource sharing object in the channel occupancy time resource by comparing the priority value corresponding to the another terminal device with the priority value used to preempt the channel occupancy time resource. After receiving a shared resource indicated by sharing indication information, the another terminal device can normally use the shared resource in the channel occupancy time resource, to improve the transmission efficiency in the unlicensed spectrum.

In some implementations, the first sharing indication information includes a location of the first shared resource and/or a type of listen before talk LBT at the location of the first shared resource.

Optionally, the first sharing indication information further includes the second priority value.

In some implementations, the method further includes: determining that the second terminal device is a sharing object of the first channel occupancy time resource based on the first channel occupancy time resource, a location of a first reserved resource, and a location of a second reserved resource, where the first information further includes the location of the first reserved resource, and the second information further includes the location of the second reserved resource.

In some implementations, the method further includes: The first shared resource is a part or all of resources that are in the first reserved resource and that meet a sharing condition of the first COT resource, the sharing condition of the first COT resource includes that a time interval between resource blocks corresponding to the first reserved resource and the second reserved resource meets a time interval of type 2 LBT, the first COT resource covers a part or all of resource blocks corresponding to the first reserved resource, and a data priority value corresponding to data related to the first information is less than or equal to a data priority value corresponding to data sent by the first terminal device.

According to a second aspect, a communication method is provided. The method is applied to a second terminal device, and the method includes: receiving second sharing indication information, where the second sharing indication information indicates a second shared resource obtained by the second terminal device, the second sharing indication information includes a target channel access priority value, the target channel access priority value indicates a channel access priority corresponding to a second channel occupancy time resource, and the second channel occupancy time resource includes the second shared resource; and sending first data on the second shared resource based on the target channel access priority value.

According to the foregoing technical solution, the second terminal device determines, based on the priority value corresponding to the channel occupancy time resource, whether to re-assemble the data sent on the shared resource in the channel occupancy time resource, so that the second terminal device can normally use the channel occupancy time resource, to improve transmission efficiency over an unlicensed spectrum.

In some implementations, a channel access priority value corresponding to the first data is less than or equal to the target channel access priority value.

In some implementations, the sending first data on the second shared resource based on the target channel access priority value includes: when the second shared resource is used for initial transmission, assembling data based on the target channel access priority value, to obtain the first data; and sending the first data on the second shared resource.

In some implementations, the sending first data on the second shared resource based on the target channel access priority value includes: when the second shared resource is used for retransmission, if a channel access priority value corresponding to initially transmitted data is less than or equal to the target channel access priority value, sending the first data on the second shared resource, where the first data is the initially transmitted data.

In some implementations, the sending first data on the second shared resource based on the target channel access priority value includes: when the second shared resource is used for retransmission, if a channel access priority value corresponding to initially transmitted data is greater than the target channel access priority value, assembling data based on the target channel access priority value, to obtain the first data; and sending the first data on the second shared resource.

According to a third aspect, a communication method is provided. The method is applied to a fourth terminal device, and the method includes: obtaining a first receiving resource of a first sidelink feedback channel, where the first sidelink feedback channel is used to carry a first hybrid automatic repeat request message from a fifth terminal device; obtaining a first sending resource of a second sidelink feedback channel, where the second sidelink feedback channel is used to carry a second hybrid automatic repeat request message sent to a sixth terminal device, and the first sending resource is indicated by location information of the first sending resource in third sharing indication information; and when the first receiving resource and the first sending resource overlap, receiving the first sidelink feedback channel or sending the second sidelink feedback channel based on the location information of the first sending resource and/or priority information.

According to the foregoing technical solution, when a conflict occurs between the first receiving resource and the first sending resource, the terminal device formulates, at a location of a conflicting resource, a communication policy of receiving the first sidelink feedback channel or sending the second sidelink feedback channel, to ensure normal communication of the terminal device.

In some implementations, the receiving the first sidelink feedback channel or sending the second sidelink feedback channel based on the location information of the first sending resource and/or priority information includes: sending the second sidelink feedback channel on the first sending resource based on the location information of the first sending resource.

In some implementations, the sending the second sidelink feedback channel on the first sending resource based on the location information of the first sending resource includes: sending the second sidelink feedback channel on the first sending resource, where the location information of the first sending resource indicates absolute location information of the first sending resource.

According to the foregoing technical solution, when a time domain resource conflict occurs between the first receiving resource and the first sending resource, the terminal device preferentially sends the second sidelink feedback channel on the first sending resource at a location of a conflicting resource, to preferentially ensure normal use of a channel occupancy time resource, so as to improve transmission efficiency over an unlicensed spectrum and ensure the normal communication of the terminal device.

In some implementations, the sending the second sidelink feedback channel based on the location information of the first sending resource includes: the location information of the first sending resource further indicates a location of the first sending resource in a third channel occupancy time resource, and if the first sending resource is not at a last time domain location of the third channel occupancy time resource, sending the second sidelink feedback channel on the first sending resource.

According to the foregoing technical solution, when a resource overlapping location is not at the last time domain resource location of the third channel occupancy time resource, the terminal device preferentially sends the second sidelink feedback channel on the first sending resource in the third channel occupancy time resource, to preferentially ensure the normal use of the channel occupancy time resource, so as to improve the transmission efficiency in the unlicensed spectrum and ensure the normal communication of the terminal device.

In some implementations, the receiving the first sidelink feedback channel or sending the second sidelink feedback channel based on the location information of the first sending resource and/or priority information includes: receiving the first sidelink feedback channel or sending the second sidelink feedback channel based on the location information of the first sending resource and the priority information.

In some implementations, the receiving the first sidelink feedback channel or sending the second sidelink feedback channel based on the location information of the first sending resource and the priority information includes: the location information of the first sending resource further indicates a location of the first sending resource in a third channel occupancy time resource, and if the first sending resource is at a last time domain location of the third channel occupancy time resource, receiving the first sidelink feedback channel or sending the second sidelink feedback channel based on the priority information, where the priority information includes values of channel access priorities corresponding to the first sidelink feedback channel and the second sidelink feedback channel, or the priority information includes values of data priorities corresponding to the first sidelink feedback channel and the second sidelink feedback channel.

According to the foregoing technical solution, when the resource overlapping location is at the last time domain resource location of the third channel occupancy time resource, even if the second sidelink feedback channel is not preferentially sent on the first sending resource in the third channel occupancy time resource, another terminal device that obtains the third channel occupancy time resource is not affected. Therefore, the terminal device may provide a more appropriate communication policy by comparing a fourth priority value with a fifth priority value, to ensure the normal communication of the terminal device.

In some implementations, the receiving the first sidelink feedback channel or sending the second sidelink feedback channel based on the priority information includes: if the fourth priority value is less than or equal to the fifth priority value, sending the second sidelink feedback channel on the first sending resource, where the fourth priority value indicates the channel access priority corresponding to the second sidelink feedback channel, and the fifth priority value indicates the channel access priority corresponding to the first sidelink feedback channel; or the fourth priority value indicates the data priority value corresponding to the second sidelink feedback channel, and the fifth priority value indicates the data priority value corresponding to the first sidelink feedback channel.

In some implementations, the receiving the first sidelink feedback channel or sending the second sidelink feedback channel based on the priority information includes: if the fourth priority value is greater than the fifth priority value, receiving the first sidelink feedback channel on the first receiving resource, where the fourth priority value indicates the channel access priority corresponding to the second sidelink feedback channel, and the fifth priority value indicates the channel access priority corresponding to the first sidelink feedback channel; or the fourth priority value indicates the data priority value corresponding to the second sidelink feedback channel, and the fifth priority value indicates the data priority value corresponding to the first sidelink feedback channel.

According to a fourth aspect, a communication apparatus is provided. The apparatus is a first terminal device, and the apparatus includes a transceiver unit. The transceiver unit is configured to receive first information from a second terminal device, where the first information includes a first priority value, and the first priority value indicates a priority of data corresponding to the first information; and send first sharing indication information to the second terminal device, where the first sharing indication information indicates a first shared resource for the second terminal device, a second priority value is greater than or equal to the first priority value, the second priority value indicates a priority corresponding to a first channel occupancy time resource, and the first channel occupancy time resource includes the first shared resource.

For related content of technical effects corresponding to the technical solution of the fourth aspect, refer to corresponding descriptions of the first aspect.

In some implementations, the apparatus further includes a processing unit, where the processing unit is configured to determine the first channel occupancy time resource based on the first priority value.

In some implementations, the transceiver unit is further configured to receive second information from the third terminal device, where the second information includes a third priority value, and the third priority value indicates a priority of data corresponding to the second information; and the processing unit is specifically configured to determine the first channel occupancy time resource based on the first priority value and the third priority value.

In some implementations, the processing unit is specifically configured to preempt the first channel occupancy time resource based on a largest priority value in a first set, where the first set includes the first priority value, the third priority value, and a priority value corresponding to data sent by the first terminal device, or the first set includes the first priority value and the third priority value, and the second priority value is the largest priority value.

In some implementations, the processing unit is specifically configured to determine, based on the first priority value, that the second terminal device is a sharing object corresponding to the first channel occupancy time resource, where the second priority value is a priority value corresponding to data sent by the first terminal device.

In some implementations, the first sharing indication information includes a location of the first shared resource and/or a type of listen before talk LBT at the location of the first shared resource.

Optionally, the first sharing indication information further includes the second priority value.

In some implementations, the processing unit is further specifically configured to determine that the second terminal device is a sharing object of the first channel occupancy time resource based on the first channel occupancy time resource, a location of a first reserved resource, and a location of a second reserved resource, where the first information further includes the location of the first reserved resource, and the second information further includes the location of the second reserved resource.

In some implementations, the first shared resource is a part or all of resources that are in the first reserved resource and that meet a sharing condition of the first COT resource, the sharing condition of the first COT resource includes that a time interval between resource blocks corresponding to the first reserved resource and the second reserved resource meets a time interval of type 2 LBT, the first COT resource covers a part or all of resource blocks corresponding to the first reserved resource, and a data priority value corresponding to data related to the first information is less than or equal to a data priority value corresponding to data sent by the first terminal device.

According to a fifth aspect, a communication apparatus is provided. The apparatus is a second terminal device, and the apparatus includes a transceiver unit. The transceiver unit is configured to receive second sharing indication information, where the second sharing indication information indicates a second shared resource obtained by the second terminal device, the second sharing indication information includes a target channel access priority value, the target channel access priority value indicates a channel access priority corresponding to a second channel occupancy time resource, and the second channel occupancy time resource includes the second shared resource; and send first data on the second shared resource based on the target channel access priority value.

For related content of technical effects corresponding to the technical solution of the fifth aspect, refer to corresponding descriptions of the second aspect.

In some implementations, a channel access priority value corresponding to the first data is less than or equal to the target channel access priority value.

In some implementations, the apparatus further includes a processing unit. The processing unit is configured to: when the second shared resource is used for initial transmission, assemble data based on the target channel access priority value, to obtain the first data; and the transceiver unit is further configured to send the first data on the second shared resource.

In some implementations, the transceiver unit is further configured to: when the second shared resource is used for retransmission, if a channel access priority value corresponding to initially transmitted data is less than or equal to the target channel access priority value, send the first data on the second shared resource, where the first data is the initially transmitted data.

In some implementations, when the second shared resource is used for retransmission, if a channel access priority value corresponding to initially transmitted data is greater than the target channel access priority value, the processing unit is configured to assemble data based on the target channel access priority value, to obtain the first data; and the transceiver unit is configured to send the first data on the second shared resource.

According to a sixth aspect, a communication apparatus is provided. The apparatus is a fourth terminal device, and the apparatus includes a transceiver unit and a processing unit. The processing unit is configured to obtain a first receiving resource of a first sidelink feedback channel, where the first sidelink feedback channel is used to carry a first hybrid automatic repeat request message from a fifth terminal device; the processing unit is configured to obtain a first sending resource of a second sidelink feedback channel, where the second sidelink feedback channel is used to carry a second hybrid automatic repeat request message sent to a sixth terminal device, and the first sending resource is indicated by location information of the first sending resource in third sharing indication information; and when the first receiving resource and the first sending resource overlap, the transceiver unit is configured to receive the first sidelink feedback channel or send the second sidelink feedback channel based on the location information of the first sending resource and/or priority information.

For related content of technical effects corresponding to the technical solution of the sixth aspect, refer to corresponding descriptions of the third aspect.

In some implementations, the transceiver unit is configured to send the second sidelink feedback channel on the first sending resource based on the location information of the first sending resource.

In some implementations, the transceiver unit is specifically configured to send the second sidelink feedback channel on the first sending resource, where the location information of the first sending resource indicates absolute location information of the first sending resource.

In some implementations, the transceiver unit is specifically configured to: further indicate, by using the location information of the first sending resource, a location of the first sending resource in a third channel occupancy time resource; and if the first sending resource is not at a last time domain location of the third channel occupancy time resource, send the second sidelink feedback channel on the first sending resource.

In some implementations, the transceiver unit is configured to receive the first sidelink feedback channel or send the second sidelink feedback channel based on the location information of the first sending resource and the priority information.

In some implementations, the transceiver unit is specifically configured to: further indicate, by using the location information of the first sending resource, a location of the first sending resource in a third channel occupancy time resource; and if the first sending resource is at a last time domain location of the third channel occupancy time resource, receive the first sidelink feedback channel or send the second sidelink feedback channel based on the priority information, where the priority information includes values of channel access priorities corresponding to the first sidelink feedback channel and the second sidelink feedback channel, or the priority information includes values of data priorities corresponding to the first sidelink feedback channel and the second sidelink feedback channel.

In some implementations, the transceiver unit is specifically configured to: if a fourth priority value is less than or equal to a fifth priority value, send the second sidelink feedback channel on the first sending resource, where the fourth priority value indicates the channel access priority corresponding to the second sidelink feedback channel, and the fifth priority value indicates the channel access priority corresponding to the first sidelink feedback channel; or the fourth priority value indicates the data priority value corresponding to the second sidelink feedback channel, and the fifth priority value indicates the data priority value corresponding to the first sidelink feedback channel.

In some implementations, the transceiver unit is specifically configured to: if a fourth priority value is greater than a fifth priority value, receive the first sidelink feedback channel on the first receiving resource, where the fourth priority value indicates the channel access priority corresponding to the second sidelink feedback channel, and the fifth priority value indicates the channel access priority corresponding to the first sidelink feedback channel; or the fourth priority value indicates the data priority value corresponding to the second sidelink feedback channel, and the fifth priority value indicates the data priority value corresponding to the first sidelink feedback channel.

In an implementation, the communication apparatus in the fourth aspect, the communication apparatus in the fifth aspect, and the communication apparatus in the sixth aspect are devices. When the apparatuses are devices, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus in the fourth aspect, the communication apparatus in the fifth aspect, and the communication apparatus in the sixth aspect are chips, chip systems, or circuits used in devices. When the apparatuses are chips, chip systems, or circuits used in devices, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a communication apparatus is provided. The apparatus includes at least one processor, configured to execute a computer program or instructions stored in a memory, to perform the method in any one of the possible implementations of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a device (for example, a first terminal device, a second terminal device, or a fourth terminal device).

In another implementation, the apparatus is a chip, a chip system, or a circuit used for a device (for example, a first terminal device, a second terminal device, or a fourth terminal device).

According to an eighth aspect, this application provides a processor, configured to perform the methods provided in the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a ninth aspect, a computer-readable storage medium is provided. The computer-readable storage medium stores program code to be executed by a device, and the program code includes the method in any one of the possible implementations of the first aspect to the third aspect.

According to a tenth aspect, a computer program product including instructions is provided. When the computer program product runs on a computer, the computer is enabled to perform the method in any one of the possible implementations of the first aspect to the third aspect.

According to an eleventh aspect, a communication system is provided, including the communication apparatus in any one of the possible implementations of the fourth aspect, or the communication apparatus in any one of the possible implementations of the fifth aspect, or the communication apparatus in any one of the possible implementations of the sixth aspect.

According to a twelfth aspect, a chip is provided, including a processor. The processor is configured to invoke and run a computer program from a memory, to enable a communication apparatus in which the chip is installed to perform the method in any one of the possible implementations of the first aspect to the third aspect.

## BRIEF DESCRIPTION OF DRAWINGS

FIG. 1 is a diagram of an architecture of a communication system according to an embodiment of this application;
FIG. 2 is a diagram of a communication scenario according to an embodiment of this application;
FIG. 3 is a schematic flowchart of a communication method according to an embodiment of this application;
FIG. 4 is an interaction diagram of a communication method according to an embodiment of this application;
FIG. 5 is a diagram of a first reserved resource according to an embodiment of this application;
FIG. 6 is a diagram of a location, in a COT resource, of a shared resource corresponding to a terminal device that meets a sharing condition according to an embodiment of this application;
FIG. 7 is an interaction diagram of another communication method according to an embodiment of this application;
FIG. 8 is a schematic flowchart of another communication method according to an embodiment of this application;
FIG. 9 is an interaction diagram of still another communication method according to an embodiment of this application;
FIG. 10 is a diagram of another communication scenario according to an embodiment of this application;
FIG. 11 is a schematic flowchart of still another communication method according to an embodiment of this application;
FIG. 12 is an interaction diagram of yet another communication method according to an embodiment of this application;
FIG. 13 is a diagram of an apparatus 1300 of a communication method according to an embodiment of this application;
FIG. 14 is a diagram of another communication apparatus 1400 according to an embodiment of this application; and
FIG. 15 is a diagram of a chip system 1500 according to an embodiment of this application.

## DESCRIPTION OF EMBODIMENTS

The following describes technical solutions of embodiments of this application with reference to the accompanying drawings.

For ease of understanding of embodiments of this application, the following descriptions are first provided before embodiments of this application are described.

First, in embodiments of this application, "indication" may include a direct indication and an indirect indication, or may include an explicit indication and an implicit indication. Information indicated by a message (for example, a first request message described below) is referred to as to-be-indicated information. In a specific implementation process, the to-be-indicated information may be indicated in a plurality of manners, for example, but not limited to, may be directly indicated, for example, indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

Second, the terms "first", "second", and various numbers in the following embodiments are merely used for differentiation for ease of description, but are not intended to limit the scope of embodiments of this application, for example, for differentiation of different reference information.

The technical solutions of embodiments of this application may be applied in various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system.

The technical solutions provided in this application may be further applied to a future communication system, for example, a sixth generation mobile communication system. This is not limited in this application.

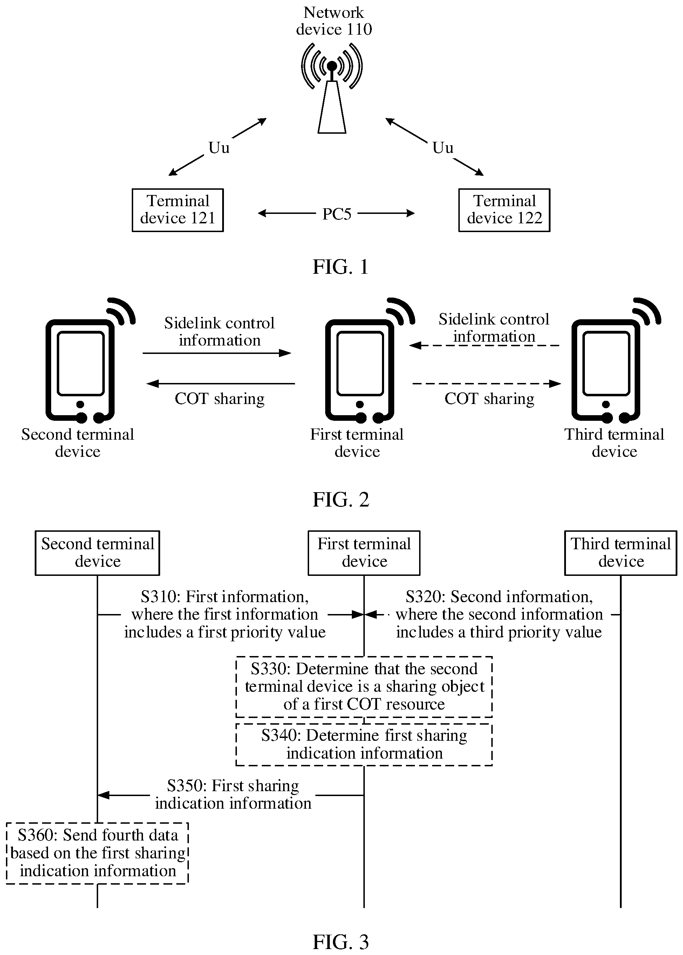

FIG. 1 is a diagram of an architecture of a communication system according to an embodiment of this application.

FIG. 1 is a diagram of a scenario of communication between devices. In the scenario shown in FIG. 1, there are mainly two communication interfaces: a communication interface (for example, a Uu interface) between a terminal device 121 and a network device 110, and a communication interface (for example, a PC5 interface) between the terminal device 121 and a terminal device 122. The Uu interface is used for communication between user equipment and a base station/ roadside unit, and the PC5 interface is used for sidelink communication between terminals. On the Uu interface, a link used by a terminal to send data to the base station is referred to as an uplink (uplink), and a link used by the terminal to receive data from the base station is referred to as a downlink (downlink). A communication interface between terminals is referred to as the PC5 interface. On the PC5 interface, a link for data transmission between the terminals is referred to as a sidelink (sidelink) or a direct link. The sidelink is usually used in a scenario in which direct communication may be performed between devices, such as device to device (device to device, D2D). In the scenario, data transmission between the devices does not need to be performed via the base station. Vehicle to everything (vehicle to everything, V2X) communication may be considered as a special case of D2D communication.

The following briefly describes the devices shown in FIG. 1.

1. A terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

In embodiments of this application, the terminal device may alternatively be a terminal device in an internet of things (internet of things, IoT) system. The IoT is an important component in development of future information technologies. A main technical feature of the IoT is to connect an object to a network by using a communication technology, to implement an intelligent network of human-machine interconnection and thing-thing interconnection. In this case, the terminal device may alternatively be a wearable device. The wearable device may also be referred to as a wearable intelligent device, and is a general term of a wearable device that is intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud exchange. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, a V2X communication system is a special representation form of the IoT communication system in a transportation scenario. The V2X communication system provides vehicle information by using a sensor, a vehicle-mounted terminal, and the like that are loaded on a vehicle, and implements mutual communication between vehicles, between vehicles and people, between vehicles and roadside infrastructure, and between vehicles and a network by using various communication technologies. In this case, the terminal device may be a vehicle terminal.

2. A network device may be a device configured to communicate with the terminal device. The network device may be a base transceiver station (Base Transceiver Station, BTS) in a global system for mobile communications (Global System of Mobile communications, GSM) or a code division multiple access (Code Division Multiple Access, CDMA) system, a base station (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a future 5G network, a network device in a future evolved PLMN network, or the like. This is not limited in embodiments of this application.

On the Uu interface, data and radio resource control (radio resource control, RRC) signaling are transmitted between the terminal and the base station by using a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. An RLC bearer includes an RLC entity and a corresponding logical channel (Logical Channel, LCH). A configuration of the radio bearer is configurations of a PDCP entity, an RLC entity, and a logical channel of the radio bearer. The configuration of the radio bearer needs to meet a quality of service (quality of service, QoS) requirement of a service transmitted by using the radio bearer. On the Uu interface, the configuration of the radio bearer is configured by the network device for the terminal.

For example, Uu interface communication in the V2X communication is a communication manner in which a terminal device of a sender sends V2X data to a base station through the Uu interface, the base station sends the V2X data to a V2X application server for processing, the V2X application server delivers processing result data to the base station, and a base station sends the processing result data to a terminal device of a receiver. The base station that sends the V2X data to the V2X application server and the base station that receives the processing result data and forwards the result to the terminal device may be a same base station, or may be different base stations, and may be specifically determined by the V2X application server.

On the PC5 interface, data and RRC signaling also need to be transmitted between terminals by using a radio bearer. The radio bearer on the PC5 interface may be referred to as a sidelink radio bearer (sidelink radio bearer, SL RB). In a long term evolution (long term evolution, LTE) V2X system, the radio bearer on the PC5 interface are established by a transmitting-end terminal and a receiving-end terminal separately, and a configuration of the radio bearer is pre-defined in a standard or is determined by the transmitting-end terminal and the receiving-end terminal.

For example, PC5 interface communication in the V2X communication is a direct communication manner between terminal devices, and this direct communication link may be referred to as a side link or a sidelink (sidelink, SL).

For ease of understanding, technical terms in embodiments of this application are first described as follows.

1. Licensed spectrum

Licensed spectrums are spectrum resources allocated by each country to operators in the country according to international rules and planning of the country. Each of the operators pays a license fee for an exclusive usage right for the spectrum resources allocated to the operator, and service requirements of coverage, spectrum efficiency, and reliability can be met.

2. Unlicensed spectrum

Unlicensed spectrums are a supplement to licensed spectrums for capacity increase and improvement of data connectivity in some cases. A new radio unlicensed (new radio unlicensed, NR-U) spectrum is a 5G technology that operates over an unlicensed spectrum, where the NR-U spectrum is designed based on a new radio (new radio, NR) design in consideration of regulatory requirements on unlicensed frequency bands.

3. Listen before talk (listen before talk, LBT) mechanism

To fairly use an unlicensed spectrum, both a terminal device and a network device contend for, before sending data, a resource in the unlicensed spectrum using the LBT channel detection mechanism. In the LBT mechanism, as the name implies, before sending a signal (for example, a data signal or a control signal) on a channel, a communication device may first detect whether the channel is idle. The communication device may send the signal on the channel if the channel is in an idle state; and the communication device cannot send the signal on the channel if the channel is not in an idle state. Such a detection process may be referred to as a clear channel assessment (clear channel assessment, CCA) process or a channel access procedure.

Specifically, LBT is usually performed at a channel granularity, for example, 20 MHz. The LBT mechanism allows a plurality of users to share one channel. There are two results in a process of executing the LBT mechanism: LBT success (that is, the channel access procedure is completed), and LBT failure (that is, the channel access procedure is not completed). The communication device may continuously detect the channel in a period of time by using the LBT mechanism. When the communication device finds, in a specified period of time, that a channel value is occupied, LBT may fail.

Specifically, there are two types of LBT: type 1 LBT and type 2 LBT.

In NR-U, before sending data, the communication device needs to perform LBT. A type 1 LBT channel access procedure may be: performing energy detection based on a fallback mechanism, with a window defined for a specific bandwidth, where a range of a quantity of detected slots is defined in the window; after the communication device detects at least A idle energy detection slots by randomly selecting a value A in the window (or the value range), it is considered that a channel is idle, and the communication device can use the idle channel to transmit data; otherwise, it is considered that the channel is busy, and the communication device does not use the busy channel to transmit data. Idle energy detection means that signal energy received in fixed duration is less than or equal to a preset threshold. When detection is completed in an LBT fallback process and the channel is determined to be idle, if the data is not ready for transmission, the data needs to be awaited for transmission. Before data transmission, a physical layer needs to additionally detect a sensing slot of the channel. If a detection result for the sensing slot is also idle, the data is directly sent to an air interface. In other words, the LBT procedure actually has two phases. In a phase 1, a fallback process is performed, and in a phase 2, a sensing slot of a channel is detected. When both the phases are idle, the data can be sent.

There may be three types of LBT in a type 2 LBT channel access procedure: type 2A, type 2B, and type 2C. If a time domain interval between a preceding resource and a following resource is at least 25 $\mu$s, the network device indicates the terminal device to perform type 2A LBT, in other words, the terminal device can access a channel in the unlicensed spectrum only when the terminal device senses that the channel is in an idle state for at least 25 $\mu$s. If a time domain interval between a preceding resource and a following resource is equal to 16 $\mu$s, the network device indicates the terminal device to perform type 2B LBT, in other words, the terminal device can access a channel in the unlicensed spectrum only when the terminal device senses that the channel is in an idle state for at least 16 $\mu$s. If a time domain interval between a preceding resource and a following resource is less than 16 $\mu$s, the network device indicates the terminal device to perform type 2C LBT, in other words, the terminal device directly uses a channel in the unlicensed spectrum.

4. Channel access priority class (channel access priority classes, CAPC)

If a result in a process of executing an LBT mechanism by a communication device is LBT failure, that is, there is currently no idle channel for the communication device for signal transmission, a transmitter of the communication device waits for a contention window, and then executes the LBT mechanism again. A size of a window condition of the contention window of the communication device may be adjusted based on a CAPC. If a CAPC corresponding to data to be transmitted by the communication device is high, the communication device may use a shorter condition window to obtain more channel opportunities for information transmission. A higher CAPC indicates a smaller value corresponding to the CAPC. To unify the description, a "priority value" is used to represent the CAPC.

The priority value is associated with a quality of service class identifier (quality of service class identifier, QCI), and a QOI identifies a quality of service class to which a to-be-sent service belongs.

In NR-U, a terminal device may receive a configured grant from a base station, to perform uplink transmission on a plurality of logical channels over a data connection, where the logical channel determines a type of data to be transmitted, and each logical channel has an allocated priority value. The terminal device may multiplex the data on the plurality of logical channels to form a transport block (transmission block, TB) for the uplink transmission, where the priority value may be determined based on a multiplexed logical channel, that is, the priority value may be determined based on multiplexed data. The terminal device may perform an LBT procedure by using a group of LBT parameters associated with the priority value.

For specific determining of the priority value, refer to the following process. Priority values of a radio bearer (radio bearer) and a media access control control element (media access control control element, MAC CE) are fixed or configurable. For a MAC CE of a padding buffer status report (padding buffer status report, BSR) and a recommended bit rate, CAPCs are fixed to be the lowest (where for example, the priority value is 4). For a signaling radio bearer (signaling radio bearer, SRB) 0/1/3 and other MAC CEs, CAPCs are fixed to be the highest (where for example, the CAPA value is 1). For an SRB 2 and a data radio bearer (data radio bearer, DRB), priority values are configured by the base station. Considering a 5QI value of a quality of service (quality of service, QoS) flow in a DRB, in a 3GPP protocol, a 5QI value is mapped to a priority value, that is, a priority value of the DRB is determined by using the 5QI value in DRBS data, as shown in Table 1.

Table 1

| Priority value | 5QI value |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| Note: A smaller CPAC value indicates a higher priority | |

When the terminal device performs type 1 LBT, and no downlink control information (downlink control information, DCI) is given for a priority value corresponding to uplink TB transmission, a priority value of a TB is determined according to the following principles.

When the transport block is assembled at a MAC layer of the terminal device, and a type 1 LBT procedure is performed for transmission of the transport block, a priority value needs to be specified for the data block. The LBT procedure is performed based on the priority value. Principles for determining the priority value are as follows.

When the transport block includes only MAC CEs, a value corresponding to a highest CAPC of these MAC CEs is used as the priority value of the transport block.

When the transport block includes common control channel service data units (common control channel service data units, CCCH SDUs) generated based on the logical channel, a value corresponding to a highest CAPC of these CCCH SDUs is used as the priority value of the transport block.

When the transport block includes dedicated control channel service data units (dedicated control channel service data units, DCCH SDUs) generated based on the logical channel, a value corresponding to a highest CAPC of these DCCH SDUs is used as the priority value of the transport block.

In other cases, a value corresponding to a lowest CAPC of media access control control service data units (media access control service data units, MAC SDUs) generated based on the logical channel is used as the priority value of the transport block.

5. Channel occupancy time (channel occupancy time, COT)

COT is a period of channel use time obtained by a communication device by using an LBT mechanism. The communication device may occupy the COT for data signal or control signal transmission, or may share the COT with another communication device, so that the another communication device performs data signal or control signal transmission in the COT.

Specifically, the communication device that preempts the COT may share information (for example, start time of the COT, duration of the COT, and frame format information of the COT) about the COT with the another communication device.

Currently, a sharing source terminal device preempts COT based on a CAPC class corresponding to data sent by the sharing source terminal device, and then determines, based on a resource information location reserved by another terminal device and a priority of the data that are indicated in SCI sent by the another terminal device, to share a corresponding resource in a preempted COT resource with a target terminal device that meets a sharing condition. The sharing condition indicates continuity of a reserved resource of the target terminal device in the COT resource, that the reserved resource of the target terminal device is covered in the COT resource in time domain, and that a data priority of the target terminal device is greater than or equal to a data priority corresponding to the sharing source terminal device. The continuity means that a time interval between resource blocks corresponding to different reserved resources from different terminal devices meets a time interval of type 2 LBT.

FIG. 2 is a diagram of a communication scenario according to an embodiment of this application.

In a current COT sharing mechanism for sidelink communication, as shown in FIG. 2, a target terminal device (for example, a second terminal device or a third terminal device) sends sidelink control information (sidelink control information, SCI) to a sharing source terminal device (for example, a first terminal device), and the sharing source terminal device shares a corresponding shared resource in a COT resource with the target terminal device. If a channel access priority corresponding to data sent by the target terminal device on the shared resource is lower than a channel access priority used to preempt the COT resource, the target terminal device cannot normally use the shared resource in the COT resource. Consequently, an unlicensed spectrum is not fully utilized in a period of time of the preempted COT resource, and transmission efficiency in the unlicensed spectrum is reduced.

To resolve the foregoing problem, embodiments of this application provide a communication method. The following provides specific descriptions with reference to FIG. 3 to FIG. 8.

FIG. 3 is a schematic flowchart of a communication method according to an embodiment of this application.

S310: A first terminal device receives first information from a second terminal device. The first information includes a first priority value, and the first priority value indicates a priority of data corresponding to the first information.

For example, the first information may be sidelink control information or other information that carries the first priority value.

For example, the first priority value may be a channel access priority value corresponding to the data corresponding to the first information, or may be a priority (priority) value of the data corresponding to the first information. If the first priority value is a channel access priority value, the first priority value indicates a channel access priority corresponding to the data corresponding to the first information. If the first priority value is a data priority value, the first priority value indicates a data priority corresponding to the data corresponding to the first information.

The first priority value may also be understood as a priority value that corresponds to a first reserved resource and that is indicated by the first information, and the second terminal device may perform initial transmission or retransmission of data on the first reserved resource.

Optionally, S320: Receive second information from a third terminal device. The second information includes a third priority value, and the third priority value indicates a priority of data corresponding to the second information.

It should be understood that for corresponding explanations of the second information and a third priority, refer to S310. Details are not described herein again.

Optionally, S330: The first terminal device determines a first COT resource based on the first priority value.

In a possible implementation, the first COT resource is determined based on the first priority value and the third priority value.

Specifically, the first channel occupancy time resource is preempted based on a largest priority value in a first set, where the first set includes the first priority value, the third priority value, and a priority value corresponding to data sent by the first terminal device, or the first set includes the first priority value and the third priority value, and a second priority value is the largest priority value.

In a possible implementation, it is determined, based on the first priority value, that the second terminal device is a sharing object corresponding to the first channel occupancy time resource, where the second priority value is a priority value corresponding to data sent by the first terminal device.

Optionally, S340: The first terminal device determines first sharing indication information.

S350: The first terminal device sends the first sharing indication information to the second terminal device. The first sharing indication information indicates a first shared resource for the second terminal device, a second priority value is greater than or equal to the first priority value, the second priority value indicates a priority corresponding to the first COT resource, and the first COT resource includes the first shared resource.

The second priority value may also be understood as the first COT resource obtained by the first terminal device through preemption by using the second priority value.

Optionally, S360: The second terminal device sends fourth data based on the first sharing indication information. A priority value corresponding to the fourth data is less than or equal to the second priority value.

In this embodiment of this application, a priority value corresponding to data sent by another terminal device is obtained, and sharing indication information is determined, where a priority value of a resource indicated in the indication information is greater than or equal to the priority value corresponding to the another terminal device, to help ensure that the another terminal device normally uses a shared resource in an obtained COT shared resource, so as to improve transmission efficiency over an unlicensed spectrum.

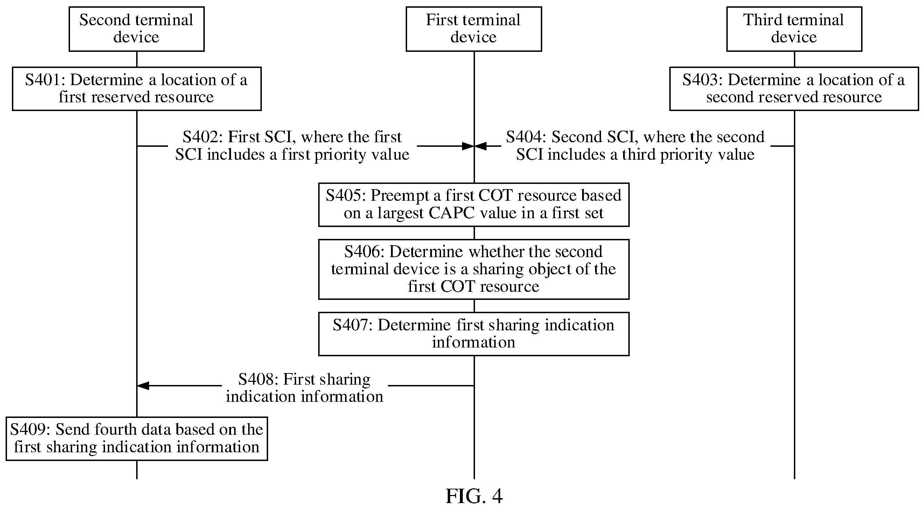

The following describes the communication method shown in FIG. 3 in detail with reference to FIG. 4 to FIG. 7.

FIG. 4 is an interaction diagram of a communication method according to an embodiment of this application. A priority value in FIG. 4 is a channel access priority value. For ease of reading, a CAPC value is used below to represent the channel access priority value. In FIG. 4, an example in which first information is sidelink control information is used for description. Information carrying a priority value is not limited in embodiments of this application.

S401: A second terminal device determines a location of a first reserved resource.

In a possible implementation, when an operating mode in which the second terminal device obtains a sidelink resource is a second mode (for example, Mode 2), the second terminal device obtains a sidelink resource pool configuration, and selects the location of the first reserved resource from the sidelink resource pool configuration. A selection manner may be random selection or selection based on a listening result.

Specifically, the second terminal device receives the sidelink resource pool configuration from a base station, or the second terminal device obtains the sidelink resource pool configuration from a preconfiguration.

More specifically, when a media access control (media access control, MAC) entity of the second terminal device is configured by a higher layer to obtain a resource in the second mode (for example, Mode 2), the second terminal device may obtain the resource in a configured resource pool in manners of resource sensing and resource selection.

The second terminal device obtains location information of reserved resources through sensing. The reserved resources are characterized by periodicity in time, a size of a resource reservation period is $P_{\text{rsvp\_TX}}$, and a quantity of these resources is determined by the periodicity. Specifically, when a state of a configuration parameter, namely, a sidelink multi-reserved resource (sl-MultiReserveResource) of the second terminal device is enabled, a value in a configuration parameter, namely, a sidelink resource reservation period (SL-ResourceReservePeriod) of the resource periodicity is $P_{\text{rsvp\_TX}}$. When a value of $P_{\text{rsvp\_TX}}$ is greater than 100 ms, a MAC layer may select a number in [5, 15] as the quantity of reserved resources. When a value of $P_{\text{rsvp\_TX}}$ is less than 100 ms, a MAC layer may select a number in

$$\left[ 5 \times \left\lceil \frac{100}{\max(20,\ P_{\text{rsvp\_TX}})} \right\rceil,\ 15 \times \left\lceil \frac{100}{\max(20,\ P_{\text{rsvp\_TX}})} \right\rceil \right]$$

as the quantity of reserved resources. These reserved resources are used for initial transmission (initial transmission) of data. When data is to be sent, first SCI of the second terminal device includes a resource reservation period (Resource reservation period) field, and the field is a resource reservation period in a sidelink higher layer configuration parameter, namely, a sidelink resource reservation period list (sl-ResourceReservePeriodList).

For retransmission, the second terminal device includes SCI information when the data is to be sent. The SCI information includes a time resource assignment (Time resource assignment) field, to indicate a resource location corresponding to retransmission of the sent data. When a higher layer parameter, namely, a maximum quantity of reserved resources (MaxNumPerReserve) is set to 2, it indicates that the second terminal device further configures one reserved resource for one initial transmission resource, and the reserved resource is used for retransmission performed when the second terminal device receives a hybrid automatic repeat request negative acknowledgement (hybrid automatic repeat request negative acknowledgement, HARQ NACK) or in the occurrence of discontinuous transmission (discontinuous transmission, DTX) after the initial transmission. When the higher layer parameter, namely, the maximum quantity of reserved resources is set to 3, it indicates that the second terminal device further configures two resources for one initial transmission resource, and the two resources are used for retransmission performed when the second terminal device receives the HARQ NACK or in the occurrence of the DTX after the initial transmission.

It should be understood that a manner in which the second terminal device determines the first reserved resource is not limited in embodiments of this application.

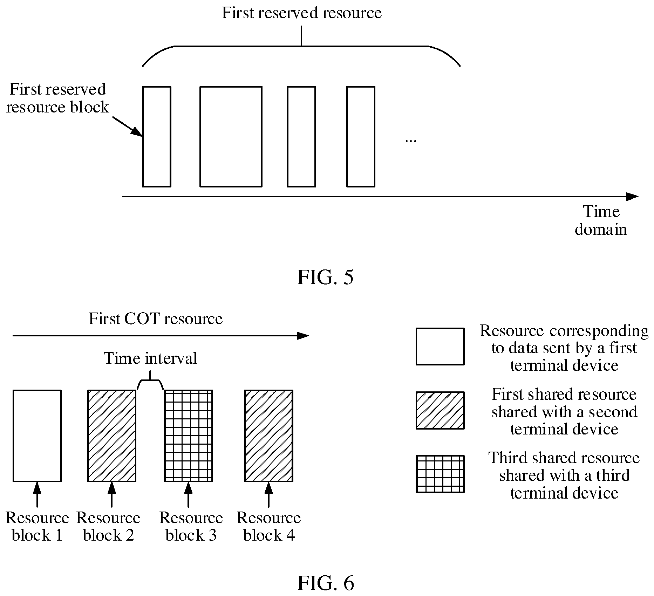

FIG. 5 is a diagram of a first reserved resource according to an embodiment of this application.

As shown in FIG. 5, the second terminal device determines the first reserved resource in the foregoing manner. The first reserved resource includes at least one first reserved resource block. It should be understood that intervals between first reserved resource blocks in time domain may be equal, or may be unequal. FIG. 5 is merely an example, and imposes no limitation. In addition, each first reserved resource block in the first reserved resource may occupy one or more slots in time domain, and quantities of slots corresponding to the first reserved resource blocks may be the same or different. This is not limited in embodiments of this application.

S402: The second terminal device sends first SCI to a first terminal device, and the first terminal device receives the first SCI from the second terminal device. The first SCI includes a first CAPC value and the location of the first reserved resource, and the first CAPC value indicates a channel access priority of data corresponding to the first SCI.

The first CAPC value may also be understood as a CAPC value of the first reserved resource indicated by the first SCI, and the first reserved resource may be used for retransmission or initial transmission of data. This is not limited in embodiments of this application.

It should be understood that the first CAPC value is determined based on third data corresponding to the first SCI. For a specific determining process, refer to the "channel access priority" in the foregoing term explanation.

S403: A third terminal device determines a location of a second reserved resource.

It should be understood that, for a specific manner in which the third terminal device determines the location of the second reserved resource, refer to S401. A sequence of performing S401 and S403 is not limited in embodiments of this application.

S404: The third terminal device sends second SCI to the first terminal device. The second SCI includes a third CAPC value and the location of the second reserved resource, and the third CAPC value indicates a channel access priority of data corresponding to the second SCI.

It should be understood that for a specific explanation of S404, refer to S402. In addition, a sequence of performing S402 and S404 is not limited in embodiments of this application.

S405: The first terminal device preempts a first COT resource based on a largest CAPC value in a first set. The first set includes the first CAPC value, the third CAPC value, and a CAPC value corresponding to data sent by the first terminal device, or the first set includes the first CAPC value and the third CAPC value.

It should be understood that if the first terminal device also needs to send data when receiving the first SCI, the first set includes the first CAPC value, the third CAPC value, and the CAPC value corresponding to the data sent by the first terminal device. In this case, if the largest CAPC value is the CAPC value corresponding to the data sent by the first terminal device, a channel access priority corresponding to the data sent by the first terminal device is the lowest in the set, and another terminal device can normally use the first COT resource. If the largest CAPC value is not the CAPC value corresponding to the data sent by the first terminal device, the channel access priority corresponding to the data sent by the first terminal device is higher than a channel access priority corresponding to the first COT resource. In this case, when the first terminal device can normally use the first COT resource, another terminal device can also normally use the first COT resource.

If the first terminal device does not need to send data when receiving the first SCI, the first set includes the first CAPC value and the third CAPC value.

Optionally, if the first terminal device also needs to send data when receiving the first SCI, before preempting the first COT resource, the first terminal device obtains the CAPC value corresponding to the data sent by the first terminal device. For a specific process of determining the CAPC value, refer to the foregoing descriptions. It should be noted that a sending object of the data sent by the first terminal device is not limited in embodiments of this application. The sending object may be the second terminal device, or may be another terminal device.

In a possible implementation, the first terminal device listens on a channel by using the largest CAPC value in the first set and by using type 1 LBT, to preempt the first COT resource.

When the first COT resource preempted by the first terminal device is also used by the first terminal device to send data of the first terminal device, after the first terminal device sends the data of the first terminal device by using the preempted first COT resource, there is still abundant time in the first COT resource because the first COT resource is a time resource. To fully use the first COT resource, the first terminal device may share the preempted first COT resource with another terminal device to send data. The data sent by the another terminal device by using the first COT resource obtained through sharing may be sent to the first terminal device, or may be sent to another terminal device. This is not limited in embodiments of this application.

It should be understood that the first terminal device may further share the first COT resource with another terminal device. In this embodiment of this application, a quantity of terminal devices that send the CAPC value received by the first terminal device is not limited. If the first terminal device shares the first COT resource with another terminal device, the first set includes the CAPC value sent by another terminal device to the first terminal device, and the first terminal device obtains SCI sent by another terminal device.

It should be further understood that, if only the second terminal device sends the first SCI to the first terminal device, when the first terminal device preempts the first COT resource, the first set may include the first CAPC value, or may include the first CAPC value and the CAPC value corresponding to the data sent by the first terminal device.

S406: The first terminal device determines whether the second terminal device is a sharing object of the first COT resource.

In a possible implementation, whether the second terminal device is the sharing object of the first COT resource is determined based on the location of the first reserved resource, the location of the second reserved resource, and the first COT resource. The first reserved resource includes at least one first reserved resource block.

Specifically, if a location of the at least one first reserved resource block meets a sharing condition of the first COT resource, it is determined that the second terminal device is the sharing object of the first COT resource. The sharing condition is that a time interval between resource blocks corresponding to different reserved resources meets a time interval of type 2 LBT, and the first COT resource covers a part or all of the resource blocks corresponding to the different reserved resources. In addition, a data priority value corresponding to data related to the first SCI also needs to be less than or equal to a data priority value corresponding to the data sent by the first terminal device. The time interval of the type 2 LBT may be, for example, a time interval range of type 2A that is [16 $\mu$s, 25 $\mu$s], a time interval of type 2B that is 16 $\mu$s, or a time interval of type 2C that is (0s, 16 $\mu$s].

If locations of all first reserved resource blocks do not meet the sharing condition of the first COT resource, it is determined that the second terminal device is not the sharing object of the first COT resource.

It should be noted that the first terminal device may further share the first COT resource with another terminal device. In this case, the first terminal device also needs to determine whether the another terminal device is the sharing object of the first COT resource. In this case, locations of reserved resource blocks corresponding to the another terminal device need to meet the sharing condition of the first COT resource.

It should be understood that the first terminal device may also determine, in the foregoing manner, whether the third terminal device is the sharing object of the first COT resource. For brevity, details are not described herein again.

For example, FIG. 6 is a diagram of a location, in a COT resource, of a first shared resource corresponding to a terminal device that meets a sharing condition according to an embodiment of this application.

In the foregoing manner, it is determined that a part of the first COT resource preempted by the first terminal device is to be shared with the second terminal device and the third terminal device. As shown in FIG. 6, a resource block 1 is a resource block corresponding to the data sent by the first terminal device, a resource block 2 and a resource block 4 are first shared resources shared with the second terminal device, and a resource block 3 is a third shared resource shared with the third terminal device. Time intervals between the resource block 1, the resource block 2, the resource block 3, and the resource block 4 all meet the time interval of the type 2 LBT, and the resource block 1, the resource block 2, the resource block 3, and the resource block 4 are all covered in the first COT resource.

It should be further understood that, if only the second terminal device sends the first SCI to the first terminal device, when it is determined that the second terminal device is the sharing object of the first COT resource, the first terminal device needs to perform determining only based on the location of the first reserved resource and the first COT resource.

S407: If the second terminal device is the sharing object of the first COT resource, the first terminal device determines first sharing indication information. The first sharing indication information includes a location of the first shared resource and/or a type of LBT at the location of the first shared resource.

A second CAPC value is a CAPC value used when the first terminal device preempts the first COT resource, that is, the largest CAPC value in S405.

The first shared resource is a resource that is in the at least one first reserved resource block and that meets the sharing condition of the first COT resource, for example, the resource block 2 and the resource block 4 in FIG. 6.

For example, the type of the LBT at the location of the first shared resource may be any one of the type 2A LBT, the type 2B LBT, and the type 2C LBT.

Optionally, the first sharing indication information may further include the second CAPC value.

It should be understood that, if the third terminal device is also the sharing object of the first COT resource, COT sharing indication information also needs to be determined. Content in the COT sharing indication information is similar to that in the first sharing indication information. For brevity, details are not described herein again.

S408: The first terminal device sends the first sharing indication information to the second terminal device, and the second terminal device receives the first sharing indication information from the first terminal device.

It should be understood that, if the third terminal device is also the sharing object of the first COT resource, the determined COT sharing indication information also needs to be sent.

S409: The second terminal device sends fourth data on the first shared resource based on the first sharing indication information.

In a possible implementation, if the first shared resource is used for initial transmission of data, the fourth data may be assembled based on the second CAPC value in the first sharing indication information, and the fourth data is sent on the first shared resource.

Alternatively, because the second CAPC value is greater than or equal to the first CAPC value, the fourth data may alternatively be assembled based on the first CAPC value, and the fourth data is sent on the first shared resource.

Assembling based on the first CAPC value may be understood as that when a MAC layer assembles a transport block, a CAPC value of a finally obtained data transport block is the first CAPC value.

In a possible implementation, if the first shared resource is used for retransmission of data, the fourth data is directly sent on the second reserved resource. The fourth data is the data corresponding to the first SCI, that is, the fourth data is the third data.

It should be understood that the second terminal device may send the fourth data to the first terminal device or another terminal device, and a sending object of the fourth data depends on the fourth data. This is not limited in embodiments of this application.

In a possible implementation, the priority value in FIG. 4 is the channel access priority value. If the priority value is the data priority value, the first terminal device may preempt the first COT resource by using a data priority value of another terminal device. For a specific process, refer to FIG. 4. The data priority value indicates a priority of data.

In this embodiment of this application, the first terminal device learns of priority values of other terminal devices, and selects a largest priority value from the priority values to preempt the COT resource. Because the priority value used when the COT resource is preempted is the largest, after receiving the shared resource indicated by the sharing indication information, another terminal device can normally use the shared resource in the COT resource, to improve transmission efficiency over an unlicensed spectrum.

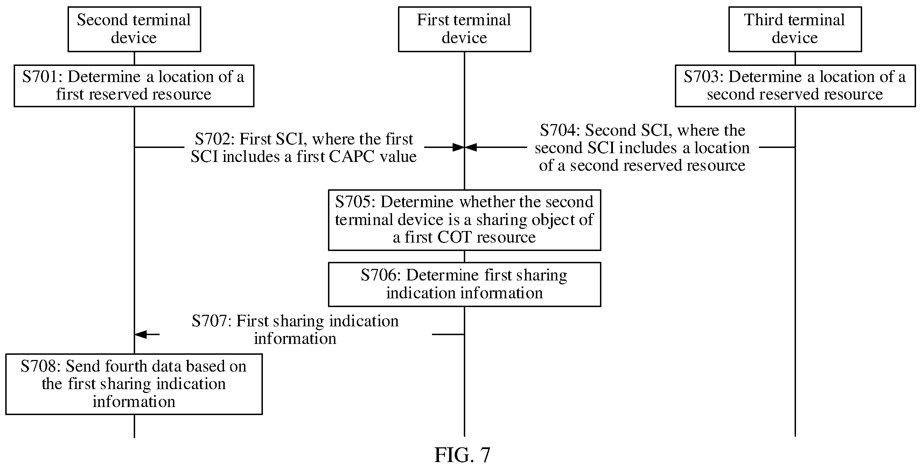

FIG. 7 is an interaction diagram of another communication method according to an embodiment of this application. A priority value in FIG. 7 is a channel access priority value. For ease of reading, a CAPC value is used below to represent the channel access priority value. In FIG. 4, an example in which first information is sidelink control information is used for description. Information carrying a priority value is not limited in embodiments of this application.

S701: A second terminal device determines a location of a first reserved resource.

S702: The second terminal device sends first SCI to a first terminal device, and the first terminal device receives the first SCI from the second terminal device. The first SCI includes a first CAPC value and the location of the first reserved resource, and the first CAPC value indicates a channel access priority of data corresponding to the first SCI.

S703: A third terminal device determines a location of a second reserved resource.

S704: The third terminal device sends second SCI to the first terminal device, and the first terminal device receives the second SCI from the third terminal device. The second SCI includes a third CAPC value and the location of the second reserved resource, and the third CAPC value indicates a channel access priority of data corresponding to the second SCI.

It should be understood that specific implementations of S701 and S703 are similar to the implementation of S401, and specific implementations of S702 and S704 are similar to the implementation of S402. For brevity, details are not described herein again.

It should be further understood that a sequence of performing S701 and S703 is not limited in embodiments of this application, and a sequence of performing S702 and S704 is not limited in embodiments of this application either.

S705: The first terminal device determines whether the second terminal device is a sharing object of a first COT resource.

The first COT resource is preempted based on a CAPC value corresponding to data sent by the first terminal device, and a preemption occasion of the first COT resource is not limited. For example, the first terminal device may have preempted the first COT resource before obtaining a CAPC value corresponding to data sent by another terminal device, or the first terminal device may still preempt the first COT resource based on the CAPC value corresponding to the data sent by the first terminal device after obtaining the CAPC value corresponding to the data sent by the another terminal device.

The first terminal device may determine, in two aspects, whether the second terminal device is the sharing object of the first COT resource. In the first aspect, determining is performed by using the location of the first reserved resource of the second terminal device. In the second aspect, determining is performed by comparing the first CAPC value with the CAPC value corresponding to the data sent by the first terminal device.

For the determining manner in the first aspect, the first terminal device determines, based on the location of the first reserved resource, the location of the second reserved resource, and the first COT resource, whether the second terminal device is the sharing object of the first COT resource. A specific determining manner is similar to that in S406. For details, refer to related descriptions in S406.

The determining manner in the second aspect may be specifically as follows: If the CAPC value corresponding to the data sent by the first terminal device is greater than or equal to the first CAPC value, it is determined that the second terminal device is the sharing object of the first COT resource; or if the CAPC value corresponding to the data sent by the first terminal device is less than the first CAPC value, it is determined that the second terminal device is not the sharing object of the first COT resource.

It should be understood that a determining sequence of the first aspect and the second aspect is not limited in embodiments of this application.

For example, if the first terminal device needs to determine a plurality of terminal devices, terminal devices that meet a CAPC value condition may be first selected in the determining manner in the second aspect, and then determining in the first aspect is performed on these terminal devices that meet the CAPC value condition. In this way, it can be ensured that another terminal device can continuously use the first COT resource, to ensure normal use of the first COT resource.

For another example, the first terminal device may first select, in the determining manner in the first aspect, terminal devices that meet a location of a reserved resource, and then perform determining in the second aspect on these terminal devices. If a reserved resource block corresponding to a terminal device that is sifted out in the determining manner in the second aspect is at a last consecutive time domain location of the first COT resource, a terminal device sharing the first COT resource may also continuously use the first COT resource.

S706: If the second terminal device is the sharing object of the first COT resource, the first terminal device determines first sharing information. The first sharing information includes a location of the first shared resource and a type of LBT at the location of the first shared resource.

A second CAPC value is the CAPC value corresponding to the data sent by the first terminal device.

The first shared resource is a resource that is in at least one first reserved resource block and that meets a sharing condition of the first COT resource, for example, the resource block 2 and the resource block 4 in FIG. 6.

For example, the type of the LBT at the location of the first shared resource may be any one of type 2A LBT, type 2B LBT, and type 2C LBT.

Optionally, the first sharing indication information may further include the second CAPC value.

It should be understood that, if the third terminal device is also a sharing object of the first COT resource, COT sharing indication information also needs to be determined. Content in the COT sharing indication information is similar to that in the first sharing indication information. For brevity, details are not described herein again.

S707: The first terminal device sends the first sharing indication information to the second terminal device, and the second terminal device receives the first sharing indication information from the first terminal device.

It should be understood that, if the third terminal device is also the sharing object of the first COT resource, the determined COT sharing indication information also needs to be sent.

S708: The second terminal device sends fourth data on the first shared resource based on the first sharing indication information.

It should be understood that S708 is similar to S409. For related descriptions, refer to S409. For brevity, details are not described herein again.

In a possible implementation, the priority value in FIG. 7 is the channel access priority value. If the priority value is the data priority value, the first terminal device may preempt the first COT resource by using a data priority value corresponding to the data sent by the first terminal device. For a specific process, refer to FIG. 7. The data priority value indicates a priority of data.

In this embodiment of this application, the first terminal device preempts a COT resource based on the priority value corresponding to the data sent by the first terminal device. Because the first terminal device obtains a priority value corresponding to another terminal device (for example, the second terminal device), the first terminal device may determine a resource sharing object in the COT resource by comparing the priority value corresponding to the another terminal device with the priority value used for preempting the COT resource. After receiving a shared resource indicated by sharing indication information, the another terminal device can normally use the shared resource in the COT resource, to improve transmission efficiency over an unlicensed spectrum.

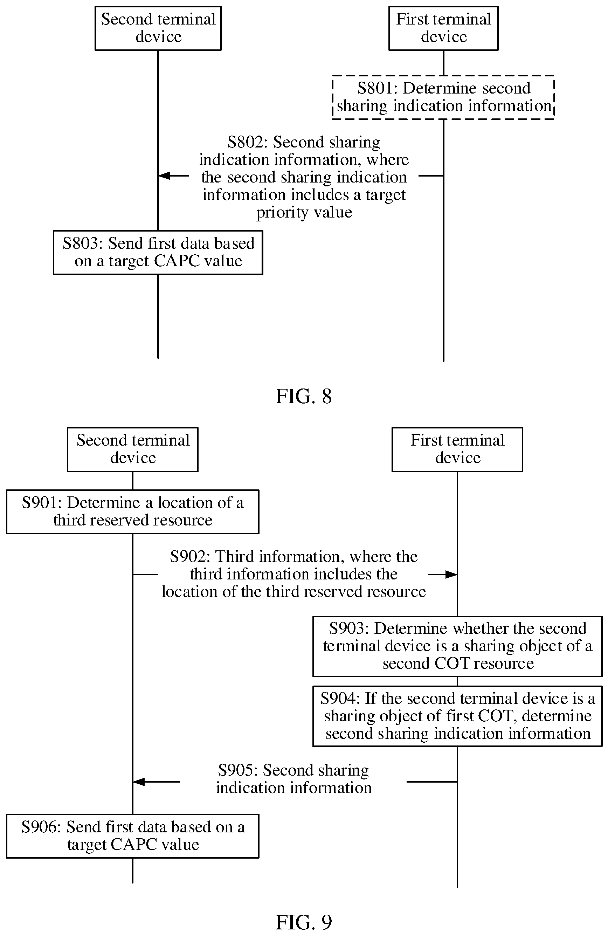

FIG. 8 is a schematic flowchart of another communication method according to an embodiment of this application.

Optionally, S801: A first terminal device determines second sharing indication information.

S802: The first terminal device sends the second sharing indication information to a second terminal device. The second sharing indication information indicates a second shared resource obtained by the second terminal device. The second sharing indication information includes a target channel access priority value, the target channel access priority value indicates a channel access priority corresponding to a second channel occupancy time resource, and the second channel occupancy time resource includes the second shared resource.

S803: The second terminal device sends first data on the second shared resource based on the target channel access priority value.

The following describes in detail the communication method in FIG. 8 with reference to FIG. 9. For ease of reading, in FIG. 9, a "target CAPC value" is used to represent the target channel access priority value.

FIG. 9 is an interaction diagram of still another communication method according to an embodiment of this application.

S901: A second terminal device determines a location of a third reserved resource.

It should be understood that an implementation of determining the location of the third reserved resource in S901 is similar to that in S401. For brevity, details are not described herein again.

S902: The second terminal device sends third information to a first terminal device, and the first terminal device receives the third information from the second terminal device. The third information includes the location of the third reserved resource.

For example, the third information may be sidelink control information or other information that carries the location of the third reserved resource. This is not limited in embodiments of this application.

S903: The first terminal device determines whether the second terminal device is a sharing object of a second COT resource.

It should be understood that the second COT resource is preempted by the first terminal device based on a CAPC value corresponding to sent data.

The location of the third reserved resource of the second terminal device, the second COT resource, a data priority value corresponding to third SCI, and a data priority value corresponding to the data sent by the first terminal device are used to determine whether the second terminal device is the sharing object of the second COT resource. The determining manner is similar to that in S406. For details, refer to the descriptions in S406.

S904: If the second terminal device is the sharing object of the second COT resource, the first terminal device determines the second sharing indication information. The second sharing indication information indicates a second shared resource obtained by the second terminal device, and the second sharing indication information includes a target CAPC value.

The target CAPC value is a CAPC value corresponding to second data sent by the first terminal device.

The second sharing indication information further includes a location of the second shared resource and/or a type of LBT at the location of the second shared resource.

For example, a type of LBT at a location of a first shared resource may be any one of type 2A LBT, type 2B LBT, and type 2C LBT.

The second shared resource is at least one reserved resource block that meets a sharing condition of a COT resource in the third reserved resource. The sharing condition of the COT resource is that at least one resource block of the third reserved resource of the second terminal device is continuous in the second COT resource, the third reserved resource of the second terminal device is covered in the second COT resource in time domain, and a data priority value of the second data is less than or equal to a data priority value corresponding to data sent by the first terminal device in the second COT resource.

The target CAPC value indicates the channel access priority corresponding to the second COT resource.

S905: The first terminal device sends the second sharing indication information to the second terminal device, and the second terminal device receives the second sharing indication information from the first terminal device.

S906: The second terminal device sends first data on the second shared resource based on the second sharing indication information.

In a possible implementation, the first data is sent on the second shared resource based on the target CAPC value.

A CAPC value corresponding to the first data is less than or equal to the target CAPC value.

For example, when the second shared resource is used for initial transmission, assembling is performed based on the target CAPC value, to determine the first data, and the first data is sent on the second shared resource.

For example, when the second shared resource is used for retransmission, the target CAPC value and the CAPC value corresponding to the second data are determined, to send the first data on the second shared resource.

The second data is data corresponding to fourth SCI, that is, initially transmitted data.

It should be understood that the CAPC value corresponding to the second data is determined when the second terminal device sends the second data. For a specific determining manner, refer to the foregoing descriptions.

In a possible implementation, if the CAPC value corresponding to the second data is less than or equal to the target CAPC value, the first data is determined as the second data.

In a possible implementation, if the CAPC value corresponding to the second data is greater than the target CAPC value, data is assembled based on the target CAPC value, to obtain the first data.

It should be understood that the second terminal device may send the first data to the first terminal device or another terminal device, and a sending object of the first data depends on the second data. This is not limited in embodiments of this application.

In this embodiment of this application, the second terminal device determines, based on a priority value corresponding to the COT resource, whether to re-assemble data sent on a shared resource in the COT resource, so that the second terminal device can normally use the COT resource, to improve transmission efficiency over an unlicensed spectrum.

Currently, in the unlicensed spectrum, there are a plurality of manners in which receiving end UE determines a resource for sending HARQ feedback information to transmitting end UE through a sidelink.

Manner 1: The transmitting end UE sends indication information to the receiving end UE. The indication information indicates a location of a resource of a physical sidelink feedback channel (physical sidelink feedback channel, PSFCH) associated with a physical sidelink shared channel (physical sidelink shared channel, PSSCH) sent by the transmitting end UE, and the HARQ feedback information is carried in the PSFCH.

Manner 2: The receiving end UE autonomously determines a location of a resource of a PSFCH. In this case, the receiving end UE sends the PSFCH to the transmitting end UE. The PSFCH carries indication information, and the indication information indicates the location of the resource of the PSFCH.

When a terminal device B is used as both a receiving end of a first PSFCH and a transmitting end of a second PSFCH, a resource corresponding to the first PSFCH and a resource corresponding to the second PSFCH may overlap, and the terminal device B cannot predict this case in advance.

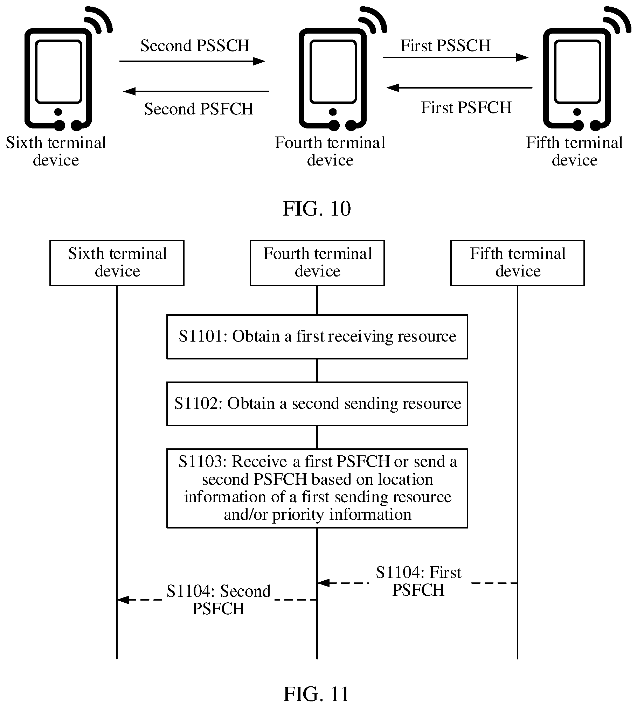

FIG. 10 is a diagram of another communication scenario (a scenario of Embodiment 4) according to an embodiment of this application.

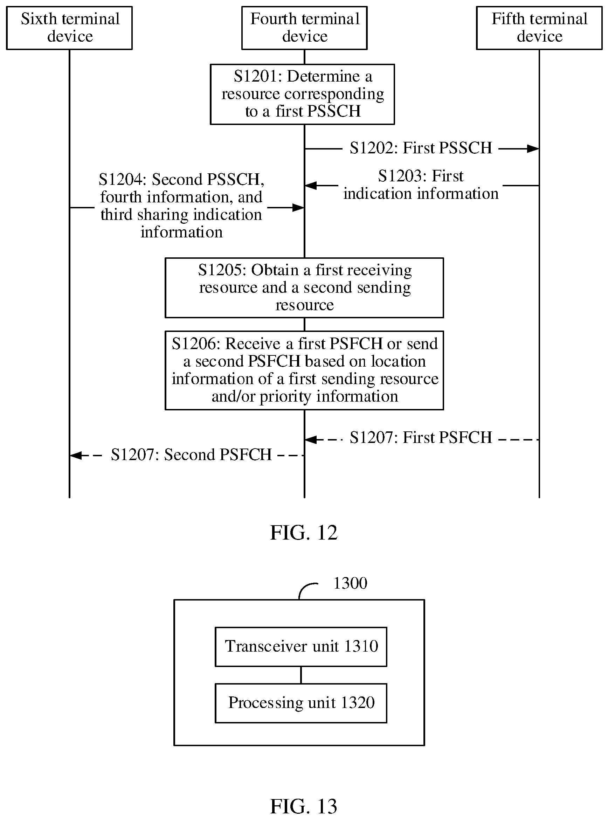

As shown in FIG. 10, in interaction between a fourth terminal device and a fifth terminal device, the fourth terminal device is a transmitting end of a first PSSCH, and the fourth terminal device receives a first PSFCH from the fifth terminal device. If a resource corresponding to the first PSFCH is determined by the fifth terminal device, the fourth terminal device cannot determine a location of the resource of the first PSFCH (that is, a resource that is of a PSFCH carrying HARQ feedback information and that is determined in Manner 2). In interaction between the fourth terminal device and a sixth terminal device, the fourth terminal device is a receiving end of a second PSSCH, and the fourth terminal device needs to send a second PSFCH to the sixth terminal device. If a resource corresponding to the second PSFCH is determined by using resource sharing indication information from the sixth terminal device, the fourth terminal device cannot determine a location of the resource of the second PSFCH (that is, a resource that is of a PSFCH carrying HARQ feedback information and that is determined in Manner 1). Embodiments of this application provide another communication method, and details are described with reference to FIG. 11 and FIG. 12.

FIG. 11 is a schematic flowchart of another communication method according to an embodiment of this application.

S1101: Obtain a first receiving resource of a first sidelink feedback channel. The first sidelink feedback channel is used to carry a first hybrid automatic repeat request message from a fifth terminal device.

It should be understood that the first receiving resource is determined by the fifth terminal device.

In a possible implementation, first indication information is received from the fifth terminal device, where the first indication information indicates the first receiving resource of the first sidelink feedback channel.

S1102: Obtain a first sending resource of a second sidelink feedback channel. The second sidelink feedback channel is used to carry a second hybrid automatic repeat request message sent to a sixth terminal device, and the first sending resource is indicated by location information of the first sending resource in third sharing indication information.

In a possible implementation, the third sharing indication information is received from the sixth terminal device, where the third sharing indication information indicates the first sending resource of the second sidelink feedback channel. A third COT resource includes the first sending resource, and the third COT resource is preempted by the sixth terminal device.

The third sharing indication information includes a location of the first sending resource and/or a type of LBT at the location of the first sending resource.

It should be understood that the third sharing indication information may be sent to a fourth terminal device in a form of an independent message, or may be carried in an added field of fourth information. The fourth information corresponds to a second sidelink shared channel. This is not limited in embodiments of this application.

For example, the fourth information may be sidelink control information or other types of information. This is not limited in embodiments of this application.

S1103: When the first receiving resource and the first sending resource overlap, receive the first sidelink feedback channel or send the second sidelink feedback channel based on the location information of the first sending resource and/or priority information.

It should be understood that the first receiving resource and the first sending resource may overlap in time domain, or may overlap in frequency domain. This is not limited in embodiments of this application.

Optionally, S1104: The fourth terminal device receives a first PSFCH from the fifth terminal device, or the fourth terminal device sends a second PSFCH to the fifth terminal device.

In this embodiment of this application, when a conflict occurs between the first receiving resource and the first sending resource, the terminal device formulates, at a location of a conflicting resource, a communication policy of receiving the first sidelink feedback channel or sending the second sidelink feedback channel, to ensure normal communication of the terminal device.

The following describes in detail the solution in FIG. 11 with reference to FIG. 12.

FIG. 12 is an interaction diagram of yet another communication method according to an embodiment of this application. For ease of reading, in FIG. 12, a "first PSFCH" is used to represent a "first sidelink feedback channel", and a "second PSFCH" is used to represent a "second sidelink feedback channel".

S1201: A fourth terminal device determines a resource corresponding to the first PSSCH.

In a possible implementation, when an operating mode in which the fourth terminal device obtains a sidelink resource is a first mode (for example, Mode 1), the fourth terminal device obtains, from a base station, a location of the resource corresponding to the first PSSCH. A manner in which the fourth terminal device determines the resource corresponding to the first PSSCH is not limited in embodiments of this application.

Specifically, the fourth terminal device receives DCI from the base station, where the DCI indicates the location of the resource corresponding to the first PSSCH. Alternatively, the fourth terminal device receives a radio resource control (radio resource control, RRC) message from the base station, to configure and authorize the location of the resource corresponding to the first PSSCH.

The first PSSCH is used to carry data sent to a fifth terminal device, a CAPC value corresponding to the data may be referred to as a fifth priority value, and a data priority value corresponding to the data may also be referred to as the fifth priority value.

S1202: The fourth terminal device sends a first PSSCH to the fifth terminal device, and the fifth terminal device receives the first PSSCH from the fourth terminal device.

It should be understood that the fourth terminal device sends the first PSSCH on the resource determined in S1101.

S1203: The fifth terminal device sends first indication information to the fourth terminal device, and the fourth terminal device receives the first indication information from the fifth terminal device.

The first indication information indicates a location of a first receiving resource of the first PSFCH carrying first HARQ information.

S1204: A sixth terminal device sends a second PSSCH, fourth SCI, and third sharing indication information to the fourth terminal device, and the fourth terminal device receives the second PSSCH, the fourth SCI, and the third sharing indication information from the sixth terminal device.

The fourth SCI corresponding to the second PSSCH carries the third sharing indication information, or the third sharing indication information is sent to the fourth terminal device in a form of an independent message.

The third sharing indication information includes location information of a first sending resource, the first sending resource belongs to a third COT resource, and the third COT resource is preempted by the sixth terminal device.

The third sharing indication information includes the location information of the first sending resource of the second PSFCH carrying second HARQ information and/or a type of LBT at a location of the first sending resource.

It should be understood that the second PSSCH is used to carry and receive data from the sixth terminal device, a CAPC value corresponding to the data is referred to as a fourth priority value, and a data priority value corresponding to the data may also be referred to as the fourth priority value. The third sharing indication information may include the fourth priority value, or the fourth SCI may include the fourth priority value.

S1205: The fourth terminal device obtains the first receiving resource corresponding to the first PSFCH and the first sending resource of the second PSFCH.

S1206: When the location of the first receiving resource and the location of the first sending resource overlap, the fourth terminal device receives the first PSFCH or sends the second PSFCH based on the location information of the first sending resource and/or the priority information.

That the location of the first receiving resource and the location of the first sending resource overlap may be understood as that the first receiving resource and the first sending resource partially or completely overlap. In this case, the fourth terminal device cannot simultaneously receive the first PSFCH and send the second PSFCH.

In a possible implementation, the second PSFCH is sent on the first sending resource based on the location information of the first sending resource.

Specifically, when the first receiving resource and the first sending resource overlap, the fourth terminal device sends the second PSFCH on the first sending resource, where the location information of the first sending resource indicates absolute location information of the first sending resource.

The absolute location information of the first sending resource may be understood as that the fourth terminal device may directly send the second PSFCH on the first sending resource based on an absolute location.

In this way, when a time domain resource conflict occurs between the first receiving resource and the first sending resource, the terminal device preferentially sends the second PSFCH on the first sending resource at a location of a conflicting resource, to preferentially ensure normal use of a COT resource, so as to improve transmission efficiency over an unlicensed spectrum and ensure the normal communication of the terminal device.

When the first receiving resource and the first sending resource overlap, if the first sending resource is not at a last time domain location of the third channel occupancy time resource, the second PSFCH is sent on the first sending resource. The location information of the first sending resource further indicates a location of the first sending resource in the third channel occupancy time resource.

In this way, when a resource overlapping location is not at the last time domain resource location of the third COT resource, the terminal device preferentially sends the second PSFCH on the first sending resource in the third COT resource, to preferentially ensure the normal use of the COT resource, so as to improve the transmission efficiency in the unlicensed spectrum and ensure the normal communication of the terminal device.

In a possible implementation, the first PSFCH is received or the second PSFCH is sent based on the location information of the first sending resource and the priority information.

The priority information includes a CAPC value corresponding to the first receiving resource of the first PSFCH and a CAPC value corresponding to the first sending resource of the second PSFCH, or the priority information includes a data priority value corresponding to the first PSFCH and a data priority value corresponding to the second PSFCH.

In a possible implementation, if the first sending resource is at the last time domain resource location of the third COT resource, it is determined, based on the priority information, to receive the first PSFCH or send the second PSFCH.

It should be understood that only values of priorities of a same type can be compared.

For example, if the fourth priority value is less than or equal to the fifth priority value, the second PSFCH is sent on the first sending resource.

The fourth priority value is the CAPC value corresponding to the second PSFCH, and the fifth priority value is the CAPC value corresponding to the first PSFCH.

That the fourth priority value is the CAPC value corresponding to the second PSFCH may be understood as that the fourth priority value is a CAPC value used when the sixth terminal device preempts the third COT resource. The fourth priority value may be carried in the third sharing indication information or the fourth SCI.

That the fifth priority value is the CAPC value corresponding to the first PSFCH may be understood as that the fifth priority value is a CAPC value of a transport block corresponding to the first HARQ information carried in a first PFSCH. The fifth priority value is determined by the fourth terminal device.

Alternatively, the fourth priority value is the data priority value corresponding to the second PSFCH, and the fifth priority value is the data priority value corresponding to the first PSFCH.

It should be understood that a higher data priority indicates a smaller data priority value. The data priority value corresponding to the first PSFCH is the same as a data priority value corresponding to the first PSSCH. The data priority value corresponding to the second PSFCH is the same as a data priority value corresponding to the second PSSCH.

The priority value of the first PSSCH is determined by the fourth terminal device. The priority value of the second PSSCH may be carried in information carried in the second PSSCH, for example, in the fourth CSI.

For example, if the fourth priority value is less than or equal to the fifth priority value, the second PSFCH is sent on the first sending resource, and the first PSFCH is received on the first receiving resource.

In this way, when the resource overlapping location is at the last time domain resource location of the third COT resource, even if the second PSFCH is not preferentially sent on the first sending resource in the third COT resource, another terminal device that obtains the third COT resource is not affected. Therefore, the terminal device may provide a more appropriate communication policy by comparing the fourth priority value with the fifth priority value, to ensure the normal communication of the terminal device.

In a possible implementation, the first PSFCH is received or the second PSFCH is sent based on priority information.

The fourth terminal device may directly receive the first PSFCH or send the second PSFCH based on the priority information. For a specific determining process, refer to the foregoing content. Details are not described herein again.

In correspondence to the methods provided in the foregoing method embodiments, embodiments of this application further provide a corresponding apparatus. The apparatus includes a corresponding unit configured to perform the foregoing method embodiments. The unit may be software, hardware, or a combination of software and hardware. It may be understood that the technical features described in the method embodiments are also applicable to the following apparatus embodiments.

FIG. 13 is a diagram of an apparatus 1300 of a communication method according to an embodiment of this application. The apparatus 1300 includes a transceiver unit 1310 and a processing unit 1320. The transceiver unit 1310 may be configured to implement a corresponding communication function. The transceiver unit 1310 may also be referred to as a communication interface or a communication unit. The processing unit 1320 may be configured to implement a corresponding processing function, for example, configure a resource.

Optionally, the apparatus 1300 further includes a storage unit. The storage unit may be configured to store instructions and/or data. The processing unit 1320 may read the instructions and/or the data in the storage unit, so that the apparatus implements actions of the device or the network element in the foregoing method embodiments.

In a first design, the apparatus 1300 may be the first terminal device (for example, the first terminal device in FIG. 6 and FIG. 7) in the foregoing embodiments, or may be a component (for example, a chip) of the first terminal device. The apparatus 1300 may implement steps or procedures performed by the first terminal device in the foregoing method embodiments. The transceiver unit 1310 may be configured to perform receiving/sending-related operations of the first terminal device in the foregoing method embodiments. The processing unit 1320 may be configured to perform processing-related operations of the first terminal device in the foregoing method embodiments.

In a possible implementation, the transceiver unit 1310 is configured to receive first information from a second terminal device, where the first information includes a first priority value, and the first priority value indicates a priority of data corresponding to the first information; and the transceiver unit 1310 is further configured to send first sharing indication information to the second terminal device, where the first sharing indication information indicates a first shared resource for the second terminal device, a second priority value is greater than or equal to the first priority value, the second priority value indicates a priority corresponding to a first channel occupancy time resource, and the first channel occupancy time resource includes the first shared resource. Optionally, the processing unit 1320 is configured to determine the first sharing indication information.

It should be understood that a specific process in which the units perform the foregoing corresponding steps is described in detail in the foregoing method embodiments. For brevity, details are not described herein.

In a second design, the apparatus 1300 may be the second terminal device (for example, the second terminal device in FIG. 8) in the foregoing embodiments, or may be a component (for example, a chip) of the second terminal device. The apparatus 1300 may implement steps or procedures performed by the second terminal device in the foregoing method embodiments. The transceiver unit 1310 may be configured to perform receiving/sending-related operations of the second terminal device in the foregoing method embodiments. The processing unit 1320 may be configured to perform processing-related operations of the second terminal device in the foregoing method embodiments.

In a possible implementation, the transceiver unit 1310 is configured to receive second sharing indication information, where the second sharing indication information indicates a second shared resource obtained by the second terminal device, the second sharing indication information includes a target channel access priority value, the target channel access priority value indicates a channel access priority corresponding to a second channel occupancy time resource, and the second channel occupancy time resource includes the second shared resource. The transceiver unit is further configured to send first data on the second shared resource based on the target channel access priority value. Optionally, the processing unit 1320 is configured to determine the first data.

It should be understood that a specific process in which the units perform the foregoing corresponding steps is described in detail in the foregoing method embodiments. For brevity, details are not described herein.

In a third design, the apparatus 1300 may be the fourth terminal device (for example, the fourth terminal device in FIG. 11) in the foregoing embodiments, or may be a component (for example, a chip) of the fourth terminal device. The apparatus 1300 may implement steps or procedures performed by the fourth terminal device in the foregoing method embodiments. The transceiver unit 1310 may be configured to perform receiving/sending-related operations of the fourth terminal device in the foregoing method embodiments. The processing unit 1320 may be configured to perform processing-related operations of the fourth terminal device in the foregoing method embodiments.

In a possible implementation, the processing unit 1320 is configured to obtain a first receiving resource of a first sidelink feedback channel, where the first sidelink feedback channel is used to carry a first hybrid automatic repeat request message from a fifth terminal device. The processing unit 1320 is further configured to obtain a first sending resource of a second sidelink feedback channel, where the second sidelink feedback channel is used to carry a second hybrid automatic repeat request message sent to a sixth terminal device, and the first sending resource is indicated by location information of the first sending resource in third sharing indication information. When the first receiving resource and the first sending resource overlap, the transceiver unit 1310 is configured to receive the first sidelink feedback channel or send the second sidelink feedback channel based on location information of the first sending resource and/or priority information.

It should be understood that a specific process in which the units perform the foregoing corresponding steps is described in detail in the foregoing method embodiments. For brevity, details are not described herein.

It should be understood that the apparatus 1300 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically the first terminal device in the foregoing embodiments, and may be configured to perform procedures and/or steps performed by the first terminal device in the foregoing method embodiments; or the apparatus 1300 may be specifically the second terminal device in the foregoing embodiments, and may be configured to perform procedures and/or steps performed by the second terminal device in the foregoing method embodiments; or the apparatus 1300 may be specifically the fourth terminal device in the foregoing embodiments, and may be configured to perform procedures and/or steps performed by the fourth terminal device in the foregoing method embodiments. To avoid repetition, details are not described herein again.

The apparatus 1300 in each of the foregoing solutions has a function of implementing corresponding steps performed by the device (for example, the first terminal device, the second terminal device, or the fourth terminal device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1310 may alternatively be a transceiver circuit (for example, may include a receiving circuit and a sending circuit), and the processing unit may be a processing circuit.

It should be noted that the apparatus in FIG. 13 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

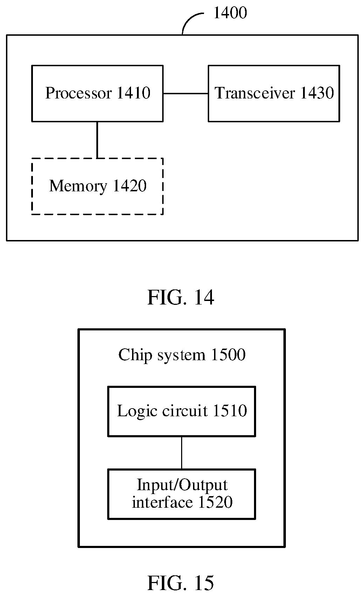

FIG. 14 is a diagram of another communication apparatus 1400 according to an embodiment of this application. The apparatus 1400 includes a processor 1410. The processor 1410 is configured to execute a computer program or instructions stored in a memory 1420, or read data/signaling stored in the memory 1420, to perform the methods in the foregoing method embodiments. Optionally, there are one or more processors 1410.

Optionally, as shown in FIG. 14, the apparatus 1400 further includes the memory 1420. The memory 1420 is configured to store the computer program or instructions and/or data. The memory 1420 may be integrated with the processor 1410, or may be disposed separately. Optionally, there are one or more memories 1420.

Optionally, as shown in FIG. 14, the apparatus 1400 further includes a transceiver 1430. The transceiver 1430 is configured to receive a signal and/or send a signal. For example, the processor 1410 is configured to control the transceiver 1430 to receive a signal and/or send a signal.

In a solution, the apparatus 1400 is configured to implement operations performed by the first terminal device in the foregoing method embodiments.

For example, the processor 1410 is configured to execute the computer program or the instructions stored in the memory 1420, to implement related operations of the first terminal device in the foregoing method embodiments,

In another solution, the apparatus 1400 is configured to implement operations performed by the second terminal device in the foregoing method embodiments.

For example, the processor 1410 is configured to execute the computer program or the instructions stored in the memory 1420, to implement related operations of the second terminal device in the foregoing method embodiments, for example, the method performed by the second device in the embodiment shown in FIG. 8 or FIG. 9.

In still another solution, the apparatus 1400 is configured to implement operations performed by the fourth terminal device in the foregoing method embodiments.

For example, the processor 1410 is configured to execute the computer program or the instructions stored in the memory 1420, to implement related operations of the fourth terminal device in the foregoing method embodiments, for example, the method performed by the fourth device in the embodiment shown in FIG. 11 or FIG. 12.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 15 is a diagram of a chip system 1500 according to an embodiment of this application. The chip system 1500 (or may be referred to as a processing system) includes a logic circuit 1510 and an input/output interface (input/output interface) 1520.

The logic circuit 1510 may be a processing circuit in the chip system 1500. The logic circuit 1510 may be coupled and connected to a storage unit, and invoke instructions in the storage unit, so that the chip system 1500 can implement the methods and functions in embodiments of this application. The input/output interface 1520 may be an input/output circuit in the chip system 1500, and outputs information processed by the chip system 1500, or inputs to-be-processed data or signaling information to the chip system 1500 for processing.

Specifically, for example, if the chip system 1500 is installed on a first terminal device (the first terminal device shown in FIG. 3, FIG. 4, or FIG. 7), the logic circuit 1510 is coupled to the input/output interface 1520, and the logic circuit 1510 may send first sharing indication information through the input/output interface 1520. The first sharing indication information may be configured by the logic circuit 1510, or the input/output interface 1520 may input first information to the logic circuit 1510 for processing. For another example, if the chip system 1500 is installed on a second terminal device (the second terminal device shown in FIG. 3, FIG. 4, or FIG. 7), the logic circuit 1510 is coupled to the input/output interface 1520, and the logic circuit 1510 may receive first sharing indication information through the input/output interface 1520.

In a solution, the chip system 1500 is configured to implement operations performed by the first terminal device in the foregoing method embodiments.

For example, the logic circuit 1510 is configured to implement processing-related operations performed by the first terminal device in the foregoing method embodiments, and the input/output interface 1520 is configured to implement sending-related and/or receiving-related operations performed by the first terminal device in the foregoing method embodiments.

In another solution, the chip system 1500 is configured to implement operations performed by the second terminal device in the foregoing method embodiments.

For example, the logic circuit 1510 is configured to implement processing-related operations performed by the second terminal device in the foregoing method embodiments, for example, processing-related operations performed by the second terminal device in the embodiment shown in FIG. 8 or FIG. 9. The input/output interface 1520 is configured to implement sending-related and/or receiving-related operations performed by the second terminal device in the foregoing method embodiment, for example, sending-related and/or receiving-related operations performed by the second terminal device in the embodiment shown in FIG. 8 or FIG. 9.

In still another solution, the chip system 1500 is configured to implement operations performed by the fourth terminal device in the foregoing method embodiments.

For example, the logic circuit 1510 is configured to implement processing-related operations performed by the fourth terminal device in the foregoing method embodiments, for example, processing-related operations performed by the fourth terminal device in the embodiment shown in FIG. 11 or FIG. 12. The input/output interface 1520 is configured to implement sending-related and/or receiving-related operations performed by the fourth terminal device in the foregoing method embodiment, for example, sending-related and/or receiving-related operations performed by the fourth terminal device in the embodiment shown in FIG. 11 or FIG. 12.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the method performed by the first terminal device in the foregoing method embodiments.

For another example, when a computer program is executed by a computer, the computer is enabled to implement the method performed by the second terminal device in the foregoing method embodiments.

For another example, when a computer program is executed by a computer, the computer is enabled to implement the method performed by the fourth terminal device in the foregoing method embodiments.

An embodiment of this application further provides a computer program product, including instructions. When the instructions are executed by a computer, the method performed by a device (for example, the second terminal device, the first terminal device, or the fourth terminal device) in the foregoing method embodiments is implemented.

An embodiment of this application further provides a communication system, including at least one of the foregoing first terminal device, second terminal device, and third terminal device, or including the fourth terminal device, the fifth terminal device, and the sixth terminal device.

For explanations and beneficial effects of related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the foregoing usable medium may include but is not limited to any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method is applied to a first terminal device, and comprises:

receiving first information from a second terminal device, wherein the first information comprises a first priority value, and the first priority value indicates a priority of data corresponding to the first information; and

sending the first sharing indication information to the second terminal device, wherein the first sharing indication information indicates a first shared resource for the second terminal device, a second priority value is greater than or equal to the first priority value, the second priority value indicates a priority corresponding to a first channel occupancy time resource, and the first channel occupancy time resource comprises the first shared resource.

2. The method according to claim 1, wherein before the sending the first sharing indication information to the second terminal device, the method further comprises:
determining the first channel occupancy time resource based on the first priority value.

3. The method according to claim 2, wherein the method further comprises:

receiving second information from a third terminal device, wherein the second information comprises a third priority value, and the third priority value indicates a priority of data corresponding to the second information; and the determining the first channel occupancy time resource based on the first priority value further comprises: determining the first channel occupancy time resource based on the first priority value and the third priority value.

4. The method according to claim 3, wherein the determining the first channel occupancy time resource based on the first priority value and the third priority value comprises: preempting the first channel occupancy time resource based on a largest priority value in a first set, wherein the first set comprises the first priority value, the third priority value, and a priority value corresponding to data sent by the first terminal device, or the first set comprises the first priority value and the third priority value, and the second priority value is the largest priority value.

5. The method according to claim 2, wherein the determining the first channel occupancy time resource based on the first priority value comprises:
determining, based on the first priority value, that the second terminal device is a sharing object corresponding to the first channel occupancy time resource, wherein the second priority value is a priority value corresponding to data sent by the first terminal device.

6. The method according to any one of claims 1 to 5, wherein the first sharing indication information comprises a location of the first shared resource and/or a type of listen before talk LBT at the location of the first shared resource.

7. The method according to claim 6, wherein the first sharing indication information further comprises the second priority value.

8. The method according to claim 3, wherein the method further comprises: determining that the second terminal device is a sharing object of the first channel occupancy time resource based on the first channel occupancy time resource, a location of a first reserved resource, and a location of a second reserved resource, wherein the first information further comprises the location of the first reserved resource, and the second information further comprises the location of the second reserved resource.

9. The method according to claim 8, wherein the first shared resource is a part or all of resources that are in the first reserved resource and that meet a sharing condition of the first channel occupancy time resource, the sharing condition comprises that a time interval between resource blocks corresponding to the first reserved resource and the second reserved resource meets a time interval condition, the first channel occupancy time covers a part or all of resource blocks corresponding to the first reserved resource, and a data priority value corresponding to data related to the first information is less than or equal to a data priority value corresponding to data sent by the first terminal device.

10. The method according to claim 9, wherein the time interval condition comprises a time interval corresponding to type 2 in a listen before talk LBT channel detection mechanism.

11. A communication method, wherein the method is applied to a second terminal device, and comprises:

receiving second sharing indication information, wherein the second sharing indication information indicates a second shared resource obtained by the second terminal device, the second sharing indication information comprises a target channel access priority value, the target channel access priority value indicates a channel access priority corresponding to a second channel occupancy time resource, and the second channel occupancy time resource comprises the second shared resource; and
sending first data on the second shared resource based on the target channel access priority value.

12. The method according to claim 11, wherein
a channel access priority value corresponding to the first data is less than or equal to the target channel access priority value.

13. The method according to claim 12, wherein the sending first data on the second shared resource based on the target channel access priority value comprises:

when the second shared resource is used for initial transmission, assembling data based on the target channel access priority value, to obtain the first data; and
sending the first data on the second shared resource.

14. The method according to claim 12, wherein the sending first data on the second shared resource based on the target channel access priority value comprises:
when the second shared resource is used for retransmission, if a channel access priority value corresponding to initially transmitted data is less than or equal to the target channel access priority value, sending the first data on the second shared resource, wherein the first data is the initially transmitted data.

15. The method according to claim 12, wherein the sending first data on the second shared resource based on the target channel access priority value comprises:

when the second shared resource is used for retransmission, if a channel access priority value corresponding to initially transmitted data is greater than the target channel access priority value, assembling data based on the target channel access priority value, to obtain the first data; and
sending the first data on the second shared resource.

16. A communication method, wherein the method is applied to a fourth terminal device, and comprises:

obtaining a first receiving resource of a first sidelink feedback channel, wherein the first sidelink feedback channel is used to carry a first hybrid automatic repeat request message from a fifth terminal device;
obtaining a first sending resource of a second sidelink feedback channel, wherein the second sidelink feedback channel is used to carry a second hybrid automatic repeat request message sent to a sixth terminal device, and the first sending resource is indicated by location information of the first sending resource in third sharing indication information; and
when the first receiving resource and the first sending resource overlap, receiving the first sidelink feedback channel or sending the second sidelink feedback channel based on the location information of the first sending resource and/or priority information.

17. The method according to claim 16, wherein the receiving the first sidelink feedback channel or sending the second sidelink feedback channel based on the location information of the first sending resource and/or priority information comprises:
sending the second sidelink feedback channel on the first sending resource based on the location information of the first sending resource.

18. The method according to claim 17, wherein the sending the second sidelink feedback channel on the first sending resource based on the location information of the first sending resource comprises:
sending the second sidelink feedback channel on the first sending resource, wherein the location information of the first sending resource indicates absolute location information of the first sending resource.

19. The method according to claim 17, wherein the sending the second sidelink feedback channel based on the location information of the first sending resource comprises:

the location information of the first sending resource further indicates a location of the first sending resource in a third channel occupancy time resource, wherein the third channel occupancy time resource is determined by the sixth terminal device; and
if the first sending resource is not at a last time domain location of the third channel occupancy time resource, sending the second sidelink feedback channel on the first sending resource.

20. The method according to claim 16, wherein the receiving the first sidelink feedback channel or sending the second sidelink feedback channel based on the location information of the first sending resource and/or priority information comprises:
receiving the first sidelink feedback channel or sending the second sidelink feedback channel based on the location information of the first sending resource and the priority information.

21. The method according to claim 20, wherein the receiving the first sidelink feedback channel or sending the second sidelink feedback channel based on the location information of the first sending resource and the priority information comprises:

the location information of the first sending resource further indicates a location of the first sending resource in a third channel occupancy time resource; and
if the first sending resource is at a last time domain location of the third channel occupancy time resource, receiving the first sidelink feedback channel or sending the second sidelink feedback channel based on the priority information, wherein
the priority information comprises values of channel access priorities corresponding to the first sidelink feedback channel and the second sidelink feedback channel, or the priority information comprises values of data priorities corresponding to the first sidelink feedback channel and the second sidelink feedback channel.

22. The method according to claim 21, wherein the receiving the first sidelink feedback channel or sending the second sidelink feedback channel based on the priority information comprises:

if a fourth priority value is less than or equal to a fifth priority value, sending the second sidelink feedback channel on the first sending resource, wherein
the fourth priority value indicates the channel access priority corresponding to the second sidelink feedback channel, and the fifth priority value indicates the channel access priority corresponding to the first sidelink feedback channel; or
the fourth priority value indicates the data priority value corresponding to the second sidelink feedback channel, and the fifth priority value indicates the data priority value corresponding to the first sidelink feedback channel.

23. The method according to claim 21, wherein the receiving the first sidelink feedback channel or sending the second sidelink feedback channel based on the priority information comprises:

if a fourth priority value is greater than a fifth priority value, receiving the first sidelink feedback channel on the first receiving resource, wherein
the fourth priority value indicates the channel access priority corresponding to the second sidelink feedback channel, and the fifth priority value indicates the channel access priority corresponding to the first sidelink feedback channel; or
the fourth priority value indicates the data priority value corresponding to the second sidelink feedback channel, and the fifth priority value indicates the data priority value corresponding to the first sidelink feedback channel.

24. A communication apparatus, comprising:
a unit or a module configured to perform the method according to any one of claims 1 to 10, a unit or a module configured to perform the method according to any one of claims 11 to 15, or a unit or a module configured to perform the method according to any one of claims 16 to 23.

25. A communication apparatus, comprising:
a processor, configured to execute a computer program stored in a memory, to enable the apparatus to perform the method according to any one of claims 1 to 10, to enable the apparatus to perform the method according to any one of claims 11 to 15, or to enable the apparatus to perform the method according to any one of claims 16 to 23.

26. The apparatus according to claim 24, wherein the apparatus further comprises a memory.

27. A computer-readable storage medium, wherein the computer-readable storage medium stores a computer program, and when the computer program is run on a computer, the computer is enabled to perform the method according to any one of claims 1 to 10, the computer is enabled to perform the method according to any one of claims 11 to 15, or the computer is enabled to perform the method according to any one of claims 16 to 23.

28. A computer program product, wherein the computer program product comprises instructions used to perform the method according to any one of claims 1 to 10, the computer program product comprises instructions used to perform the method according to any one of claims 11 to 15, or the computer program product comprises instructions used to perform the method according to any one of claims 16 to 24.

29. A chip, comprising a processor, configured to invoke and run a computer program from a memory, to enable a terminal device in which the chip is installed to perform the method according to any one of claims 1 to 10, or to perform the method according to any one of claims 11 to 15, or to perform the method according to any one of claims 16 to 24.

30. A communication system, comprising a communication apparatus for performing the method according to any one of claims 1 to 10, or comprising a communication apparatus for performing the method according to any one of claims 11 to 15, or comprising a communication apparatus for performing the method according to any one of claims 16 to 24.

Network
device 110

Uu              Uu

Terminal              Terminal
device 121   ◄──── PC5 ────►   device 122

FIG. 1

Sidelink control
information

Sidelink control
information

COT sharing              COT sharing

Second terminal
device

First terminal
device

Third terminal
device

FIG. 2

Second terminal
device

First terminal
device

Third terminal
device

S310: First information,
where the first information
includes a first priority value

S320: Second information,
where the second information
includes a third priority value

S330: Determine that the second
terminal device is a sharing object
of a first COT resource

S340: Determine first sharing
indication information

S350: First sharing
indication information

S360: Send fourth data
based on the first sharing
indication information

FIG. 3

```
┌──────────────┐              ┌──────────────┐              ┌──────────────┐
│Second terminal│             │First terminal│              │Third terminal│
│   device     │              │   device     │              │   device     │
└──────────────┘              └──────────────┘              └──────────────┘
```

| S401: Determine a location of a first reserved resource |

| S403: Determine a location of a second reserved resource |

S402: First SCI, where the first SCI includes a first priority value

S404: Second SCI, where the second SCI includes a third priority value

| S405: Preempt a first COT resource based on a largest CAPC value in a first set |

| S406: Determine whether the second terminal device is a sharing object of the first COT resource |

| S407: Determine first sharing indication information |

S408: First sharing indication information

| S409: Send fourth data based on the first sharing indication information |

FIG. 4

First reserved resource

First reserved
resource block

...

Time
domain

FIG. 5

First COT resource

Time interval

Resource    Resource    Resource    Resource
block 1      block 2      block 3      block 4

Resource corresponding
to data sent by a first
terminal device

First shared resource
shared with a second
terminal device

Third shared resource
shared with a third
terminal device

FIG. 6

EP 4 561 228 A1

```
Second terminal                    First terminal                     Third terminal
    device                             device                             device

S701: Determine a location of a                                 S703: Determine a location of a
    first reserved resource                                         second reserved resource

              S702: First SCI, where the first          S704: Second SCI, where the
              SCI includes a first CAPC value    ►◄     second SCI includes a location
                                                        of a second reserved resource

                                    S705: Determine whether the second
                                    terminal device is a sharing object of
                                             a first COT resource

                                       S706: Determine first sharing
                                            indication information

              S707: First sharing indication
         ◄          information

S708: Send fourth data based on
    the first sharing indication
           information
```

FIG. 7

FIG. 8

FIG. 9

Second PSSCH →

← Second PSFCH

Sixth terminal
device

First PSSCH →

← First PSFCH

Fourth terminal
device

Fifth terminal
device

FIG. 10

| Sixth terminal device | Fourth terminal device | Fifth terminal device |

S1101: Obtain a first receiving resource

S1102: Obtain a second sending resource

S1103: Receive a first PSFCH or send a second PSFCH based on location information of a first sending resource and/or priority information

S1104: First PSFCH

S1104: Second PSFCH

FIG. 11

Sixth terminal device

Fourth terminal device

Fifth terminal device

S1201: Determine a resource corresponding to a first PSSCH

S1202: First PSSCH →

S1203: First indication information

S1204: Second PSSCH, fourth information, and third sharing indication information

S1205: Obtain a first receiving resource and a second sending resource

S1206: Receive a first PSFCH or send a second PSFCH based on location information of a first sending resource and/or priority information

S1207: First PSFCH – – –

S1207: Second PSFCH – –

FIG. 12

1300

Transceiver unit 1310

Processing unit 1320

FIG. 13

1400

Processor 1410 — Transceiver 1430

Memory 1420

FIG. 14

Chip system 1500

Logic circuit 1510

Input/Output
interface 1520

FIG. 15

## INTERNATIONAL SEARCH REPORT

| International application No. |
| --- |
| **PCT/CN2023/110824** |

| A. | CLASSIFICATION OF SUBJECT MATTER |
| --- | --- |

H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VCN, DWPI, CNKI, 3GPP: 信道, 占用, 时间, 分享, 共享, 最大, 优先, 级, 第一, 第二, 发送, 接收, 侧, 旁, 副, 边, 链路, 反馈, 冲突, 重叠, 碰撞, COT, shar+, maximum, CAPC, priority, first, second, sidelink, SL, PSSCH, PSFCH, overlap+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021212354 A1 (LENOVO (BEIJING) LTD.) 28 October 2021 (2021-10-28) description, paragraphs 0034-0064 and 0095-0102 | 11-13, 24-30 |
| Y | WO 2021212354 A1 (LENOVO (BEIJING) LTD.) 28 October 2021 (2021-10-28) description, paragraphs 0034-0064 and 0095-0102 | 16, 24-30 |
| Y | CN 111970095 A (CHINA ACADEMY OF INFORMATION AND COMMUNICATIONS TECHNOLOGY) 20 November 2020 (2020-11-20) description, paragraphs [0031]-[0057] | 16, 24-30 |
| A | FUTUREWEI. "Discussion of channel access mechanism for sidelink transmission in unlicensed spectrum" *3GPP TSG RAN WG1 Meeting #109-e R1-2204097*, 20 May 2022 (2022-05-20), entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 October 2023** | **19 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/110824**

| Patent document cited in search report | | | Publication date (day/month/year) | Patent family member(s) | | | Publication date (day/month/year) |
|---|---|---|---|---|---|---|---|
| WO | 2021212354 | A1 | 28 October 2021 | US | 2023132437 | A1 | 04 May 2023 |
| | | | | EP | 4140213 | A1 | 01 March 2023 |
| | | | | CN | 115443705 | A | 06 December 2022 |
| CN | 111970095 | A | 20 November 2020 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210933587